# EUROPÄISCHE PATENTSCHRIFT

(11) **EP 4 293 880 B1**
(45) Veröffentlichungstag und Bekanntmachung des Hinweises auf die Patenterteilung: **29.07.2026**
(21) Anmeldenummer: 23179134.4
(22) Anmeldetag: 14.06.2023
(51) Int. Cl.: H02K 3/52, H02K 15/12, H02K 5/22, H02K 11/25, H02K 3/34

(54) **ELEKTROMOTOR, KÜCHENMASCHINE UND HERSTELLUNGSVERFAHREN**
ELECTRIC MOTOR, FOOD PROCESSOR AND METHOD OF MANUFACTURING
MOTEUR ÉLECTRIQUE, ROBOT DE CUISINE ET PROCÉDÉ DE FABRICATION

(30) Priorität: 15.06.2022 EP 22179240
(43) Veröffentlichungstag der Anmeldung: 20.12.2023
(73) Patentinhaber: Vorwerk & Co. Interholding GmbH, 42275 Wuppertal (DE)
(72) Erfinder: Schmidt, Dirk, 51688 Wipperfürth (DE); Seibt, Patrick, 40789 Monheim am Rhein (DE)
(74) Vertreter: Von Rohr Patentanwälte Partnerschaft mbB

(56) Entgegenhaltungen:
- EP-A1- 0 438 981
- EP-A1- 3 618 229
- CN-A- 103 023 262
- CN-U- 212 085 915
- DE-A1- 102020 126 632
- DE-B3- 102017 206 091
- JP-A- H0 898 466
- KR-A- 20080 067 416
- US-A1- 2008 150 376
- US-A1- 2016 197 530

## Beschreibung

Die vorliegende Erfindung betrifft einen Elektromotor, insbesondere für eine Küchenmaschine, eine Küchenmaschine mit einem Elektromotor sowie ein Verfahren zur Herstellung eines Elektromotors.

Elektromotoren, beispielsweise in Form von bürstenlosen Gleichstrommotoren (BLDC-Motoren) oder geschalteten Reluktanzmotoren (SR-Motoren), sind aus dem Stand der Technik bekannt und weisen einen Ständer/Stator und einen relativ zum Stator rotierenden Läufer/Rotor auf.

Bei bürstenlosen Gleichstrommotoren ist der Stator mit Statorspulen und der Rotor mit Permanentmagneten bestückt. Die Permanentmagneten können hierbei außen am Rotorkern (SPM - Surface Permanent Magnet) oder im Rotorkern vorgesehen bzw. eingebettet sein (IPM - Interior Permanent Magnet).

Bei geschalteten Reluktanzmotoren ist der Stator ebenfalls mit Statorspulen bestückt, der Rotor weist jedoch keine Permanentmagneten oder Spulen auf, sondern besteht ausschließlich aus Elektroblech oder dergleichen. Das Drehmoment im Rotor wird hierbei ausschließlich durch die Reluktanzkraft erzeugt.

Die EP 3 618 229 A1 offenbart einen Stator für einen BLDC-Motor, insbesondere für Pumpen in Spül- oder Waschmaschinen. Der Stator ist durch Übereinanderstapeln von Blechen hergestellt und hat eine Vielzahl von Zähnen für Spulen. An jedem Zahn ist ein einzelner, separater Wickelkern vorgesehen, der durch individuelles Umspritzen des Zahns hergestellt wird. Zwei der Wickelkerne bilden außen am Stator angeordnete Halter für Kontaktanschlüsse, nämlich einen Sternpunkt-Anschlusshalter und einen Phasen-Anschlusshalter, die einstückig mit dem jeweiligen Wickelkern ausgebildet sein können. Zur Herstellung des Stators wird zunächst eine lineare Kette von individuell umspritzten Statorzähnen gebildet und diese anschließend zu einem Ring zusammengelegt.

Die DE 10 2017 206 091 B3 betrifft einen elektrischen Antriebsmotor für eine Pumpe einer Geschirrspülmaschine. Der elektrische Antriebsmotor hat einen Stator mit einem aus mehreren gestapelten Einzelblechen zusammengesetzten Statorblechpaket und mit Spulenkörpern, auf denen Statorwicklungen aufgewickelt sind. Die Spulenkörper sind durch einen Kunststoffspritzgussköper gebildet, der durch Umspritzen des Statorblechpakets gebildet ist. Außerdem ist an dem Kunststoffspritzgusskörper ein Steckergehäuse ausgebildet, in dem an die Statorwicklung angeschlossene Steckkontakte gelagert sind.

Die CN 103023262 A betrifft einen BLDC-Motor mit einem Statorkern, Statorwicklungen und einer Statorisolatorschicht, die durch Anspritzen an den Statorkern hergestellt ist und den Statorkern umhüllt. Ein separat hergestellter Leiterplattenbefestigungsblock ist formschlüssig mit der Statorisolierschicht verbunden und am Außenumfang des Statorkerns angeordnet. Ein einstückiges Ausbilden von Statorisolierschicht und Leiterplattenbefestigungsblock wird für die Zwecke der CN 103023262 A als nachteilig beschrieben.

Die US 2016/0197530 A1 offenbart einen BLDC-Motor mit einem Statorkern und einem Isolator, der eine Isolierschicht auf der Oberfläche des Statorkerns bildet, wobei der Isolator einen vorstehenden Teil umfasst. Der Isolator hat Haken, die einen Anschluss mit Kontakten zur Stromversorgung halten.

Die CN 212085915 U betrifft ein Halteteil für einen Stator, das ein Thermostat hält. Das Halteteil ist separat ausgebildet und wird seitlich von außen an den Stator geklemmt.

Die EP 0 438 981 A1 betrifft einen AC-Motor, der ein einstückig aus Plastik geformtes "Pack" umfasst, um das eine Spule gewickelt ist. Das "Pack" hat eine Tasche, in die ein Temperaturschalter gesteckt wird.

Der vorliegenden Erfindung liegt die Aufgabe zugrunde, einen Elektromotor, eine Küchenmaschine mit einem Elektromotor und ein Herstellungsverfahren für einen Elektromotor anzugeben, wobei der Elektromotor eine einfache, kompakte, stabile und/oder kostengünstige Konstruktion aufweist bzw. eine einfache, schnelle, kompakte, stabile und/oder kostengünstige Montage/Herstellung ermöglicht, und/oder wobei der Elektromotor eine effiziente Laufweise, geringe Geräuschemission, gute Wärmeabfuhr und/oder hohe Leistungsdichte aufweist.

Die der Erfindung zugrundeliegende Aufgabe wird durch einen Elektromotor gemäß Anspruch 1, eine Küchenmaschine gemäß Anspruch 12 oder ein Verfahren gemäß Anspruch 13 gelöst. Vorteilhafte Weiterbildungen sind Gegenstand der Unteransprüche.

Der vorschlagsgemäße Elektromotor weist einen (feststehenden) Stator und einen relativ zum Stator um eine Rotationsachse drehbaren Rotor auf.

Der Stator weist einen Statorkörper/Statorkern auf, der insbesondere durch übereinander gestapelte Statorbleche bzw. Elektrobleche gebildet ist. Bei dem Statorkern handelt es sich also vorzugsweise um ein Blechpaket bzw. Statorpaket.

Der Stator bzw. Statorkern ist vorzugsweise zumindest im Wesentlichen ringförmig bzw. umschließt den Rotor konzentrisch. Die Ringachse bzw. Symmetrieachse des Stators oder Statorkerns entspricht vorzugsweise der Rotationsachse.

Der Stator weist mehrere Spulen und einen Spulenträger für die Spulen auf. Vorzugsweise weist der Spulenträger hierzu entsprechende Wickelabschnitte auf, auf denen die Spulen jeweils aufgewickelt sind bzw. die die Spulen halten/tragen.

Gemäß einem Aspekt der vorliegenden Erfindung ist der Spulenträger einstückig durch Anspritzen an oder Umspritzen des Statorkerns hergestellt.

Durch das An-/Umspritzen können vorzugsweise geringe Wandstärken des Spulenträgers erzielt werden, insbesondere geringere Wandstärken als bei aus dem Stand der Technik bekannten Lösungen wie einem zweiteiligen Spulenträger, der auf den Statorkern gesteckt wird. Dies ermöglicht eine kompaktere Bauweise des Elektromotors bzw. Stators, insbesondere mehr Platz für Windungen der Spulen.

Zudem führt das An-/Umspritzen zu einem steiferen bzw. stabileren Stator und/oder kann sichergestellt werden, dass der Spulenträger direkt am Statorkern anliegt, mit dem Statorkern in alle Raumrichtungen formschlüssig verbunden und/oder mit dem Statorkern stoffschlüssig und/oder adhäsiv verbunden ist. Hierdurch wird insbesondere ein Schwingen des Spulenträger beim Betrieb des Elektromotors verhindert oder zumindest vermindert. Dies führt in vorteilhafter Weise zu einer effizienteren Laufweise, geringeren Geräuschemission und/oder höheren Leistungsdichte.

Ferner kann durch An-/Umspritzen eine vorzugsweise verbesserte Wärmeabfuhr erzielt werden. Zum einen wirkt der Spulenträger wegen seiner geringeren Wandstärke weniger isolierend, so dass die Abwärme der Spulen besser abgeführt werden kann. Zum anderen ist die Wärmeabfuhr auch durch die direkte Anlage von Spulenträger und Statorkern verbessert, da insbesondere isolierend wirkenden Luftspalte oder dergleichen vermieden werden können.

Darüber hinaus muss keine nachträgliche Montage des Spulenträgers am Statorkern erfolgen, was einer einfachen, schnellen und/oder kostengünstigen Herstellung zuträglich ist.

Gemäß einem weiteren Aspekt der vorliegenden Erfindung weist der Spulenträger mindestens eine Halterung auf, die radial außen am Statorkern bzw. am Außenumfang des Statorkerns angeordnet ist, insbesondere den Statorkern übergreift. Die Halterung hält eine Sensoreinrichtung oder Teile davon. Besonders bevorzugt ist die Halterung einstückig an/mit/von dem Spulenträger gebildet. Optional kann die Halterung zusätzlich eine Anschlusseinrichtung oder Teile davon halten.

Durch die Halterung kann in besonders einfacher und/oder kompakter Weise die Sensoreinrichtung, und optional die Anschlusseinrichtung, gehalten bzw. angeordnet werden. Insbesondere wird hierfür kein Bauraum innerhalb des Stators benötigt. Zudem sind die Halterung, Anschlusseinrichtung und/oder Sensoreinrichtung leicht von außen zugänglich, was die Montage erleichert.

Die Anschlusseinrichtung kann elektrische Anschlusskontakte zur Stromversorgung des Elektromotors, insbesondere der Spulen, und/oder einen Sternpunkt der Verschaltung der Spulen aufweisen. **In** vorteilhafter Weise sind die Anschlusskontakte und/oder der Sternpunkt von der Halterung radial außen am Statorkern gehalten, benötigen somit keinen Bauraum innerhalb des Stators und/oder sind besser elektrisch zugänglich. Beispielsweise kann so ein Potential des Sternpunkts für die Motorsteuerung abgegriffen werden.

Besonders bevorzugt hält die Anschlusseinrichtung eine Klemme, die den Sternpunkt bildet bzw. in der die Spulendrähte der verschiedenen Spulen zu einem Sternpunkt zusammengeführt werden. Dies ist einer besonders einfachen, schnellen und/oder kostengünstigen Herstellung/Montage zuträglich. Alternativ können die Spulendrähte auch zu einem Sternpunkt verlötet oder verschweißt sein.

Die Sensoreinrichtung kann einen oder mehrere Sensoren, insbesondere einen Temperatursensor und/oder einen Hallsensor, aufweisen. Vorzugsweise erfasst der Temperatursensor die Temperatur des Elektromotors, insbesondere des Stators bzw. der Spulen, und/oder der Hallsensor den Drehwinkel bzw. die Drehzahl des Elektromotors bzw. Rotors. Der Hallsensor ist also vorzugsweise als Drehwinkelsensor ausgebildet. Alternativ oder zusätzlich kann der Hallsensor aber auch für andere Messungen vorgesehen sein bzw. verwendet werden und/oder eine Drehwinkelerfassung durch einen anderen Sensor, beispielsweise eine Lichtschranke, erfolgen. Der/die Sensor(en) ermöglichen/ermöglicht somit vorzugsweise eine Überwachung und/oder Regelung der Temperatur und/oder Drehzahl des Elektromotors, sodass eine effiziente Laufweise und/oder hohe Leistungsdichte sichergestellt ist.

Der bzw. die Sensor(en) können direkt an der Halterung befestigt sein. Es ist aber auch möglich, dass an der Halterung nur elektrische Anschlusskontakte der Sensoreinrichtung für entsprechende Sensoren direkt befestigt sind. Der/die Sensor(en) können folglich auch nur mittelbar über einen entsprechenden Anschluss von der Halterung gehalten sein. In vorteilhafter Weise ist ein solcher Anschluss von der Halterung radial außen am Statorkern gehalten, benötigt somit keinen Bauraum innerhalb des Stators und/oder ist besser elektrisch zugänglich.

Es können auch mehrere voneinander beabstandete Halterungen vorgesehen sein. Besonders bevorzugt sind zwei Halterungen vorgesehen, wobei eine der Halterungen als Anschlusshalterung ausgebildet ist und die Anschlusseinrichtung hält und die andere der Halterungen als Sensorhalterung ausgebildet ist und die Sensoreinrichtung hält. Hierdurch wird eine einfachere und/oder kompaktere Bauweise erzielt, da die Einrichtungen besser um den Statorkern verteilt sind bzw. werden können. Insbesondere können die einzelnen Halterungen dann kleiner bzw. kompakter gestaltet werden, da nicht alle Einrichtungen auf einer Halterung angeordnet sein müssen. Es ist auch möglich, mehr als zwei Halterungen vorzusehen, beispielsweise für mehrere Sensoren.

Besonders bevorzugt ist der Spulenträger einstückig durch Anspritzen an den Statorkern hergestellt und die vorschlagsgemäße(en) Halterung(en) vorgesehen. Die Halterung bzw. jede Halterung, die insbesondere (jeweils) ein Abschnitt bzw. Teil des einstückigen Spulenträgers ist, ist dann (außen) an den Statorkern angespritzt. Hierdurch werden entsprechende und synergistische Vorteile erzielt, insbesondere eine einfache und kostengünstige Bauweise bzw. Herstellung, effizientere Laufweise, geringere Geräuschemission und/oder höheren Leistungsdichte.

Generell hat der vorschlagsgemäße Elektromotor eine geringe Geräuschemission, hohe Leistungsdichte und/oder große Drehzahlspreizung.

Unter einen großen Drehzahlspreizung ist zu verstehen, dass der Elektromotor über einen großen Drehzahlbereich betrieben werden kann, insbesondere sowohl bei niedrigen als auch bei hohen Drehzahlen. Besonders bevorzugt sind Drehzahlen von 10 U/min bis 10.000 U/min mit dem vorschlagsgemäßen Elektromotor realisierbar.

Darüber hinaus kann vorzugsweise das volle Drehmoment im Stillstand abgerufen werden und/oder der Elektromotor definiert angesteuert werden, insbesondere in definierten kleinen Winkelbereichen gedreht werden.

Ein weiterer Aspekt der vorliegenden Erfindung betrifft ein Verfahren zur Herstellung eines Elektromotors bzw. eines Stators für einen Elektromotor, bei dem ein Spulenträger des Stators durch Anspritzen an einen Statorkern hergestellt wird und bei dem ein Spulenträger mit mindestens einer Halterung hergestellt wird, die radial außen am Statorkern angeordnet und dazu ausgebildet ist, eine eine Sensoreinrichtung, optional zusätzlich eine Anschlusseinrichtung, zu halten.

Insbesondere wird bei dem vorschlagsgemäßen Verfahren der Spulenträger so hergestellt, dass er den Statorkern umgreift und/oder stoffschlüssig und/oder adhäsiv mit dem Statorkern verbunden ist und/oder in axialer Richtung, in radialer Richtung und in Umfangsrichtung einen Formschluss mit dem Statorkern bildet.

Durch das vorschlagsgemäße Verfahren können entsprechende Vorteile erzielt werden. Insbesondere kann mittels des vorschlagsgemäßen Verfahrens der zuvor beschriebene Elektromotor bzw. dessen Stator hergestellt werden.

Ein weiterer Aspekt der vorliegenden Erfindung betrifft eine Küchenmaschine mit einem vorschlagsgemäßen Elektromotor und/oder einem mit dem vorschlagsgemäßen Verfahren hergestellten Elektromotor.

Die vorschlagsgemäße Küchenmaschine wird von dem Elektromotor angetrieben, insbesondere zum Zerkleinern und/oder Rühren bzw. Mischen von Lebensmitteln. Besonders bevorzugt weist die Küchenmaschine einen Rührer, ein Schneide o. dgl. auf, der/die von dem Elektromotor in Rotation versetzt werden kann.

Durch die Verwendung des vorschlagsgemäßen Elektromotors in einer Küchenmaschine können entsprechende Vorteile erzielt werden. Insbesondere ist die geringe Geräuschemission, effiziente Laufweise und/oder verbesserte Ansteuerbarkeit vorteilhaft.

Zudem ist der große Drehzahlbereich, in dem der Elektromotor arbeiten kann, besonders vorteilhaft bei der Verwendung in einer Küchenmaschine. Je nach eingestellter Drehzahl des Elektromotors kann sowohl ein Rühren von Speisen als auch ein Zerkleinern von Speisen erzielt werden. Der vorschlagsgemäße Elektromotor erlaubt hierbei vorzugsweise auch ein langsames Rühren, was eine größere Rezeptvielfalt erlaubt. Zudem wird vorzugsweise auch ein definiertes Zerkleinern von Zutaten ermöglicht, was einer besseren Zubereitung und/oder besseren Optik der Speisen zuträglich ist.

Ferner kann der vorschlagsgemäße Elektromotor aufgrund seiner kompakten, flachen bzw. einfachen Bauweise besonders platzsparend in der Küchenmaschine angeordnet werden.

Grundsätzlich kann der Elektromotor jedoch auch in anderen Vorrichtungen verwendet werden, beispielsweise einem Staubsauger oder Saugroboter.

Die räumlichen Zuordnungen, Anordnungen und/oder Ausrichtungen, insbesondere die im Rahmen der vorliegenden Erfindung verwendeten Begriffe "radial", "axial" und/oder "in Umfangsrichtung", beziehen sich - sofern nicht anders angegeben - insbesondere auf die Rotationsachse des Rotors bzw. eine Rotorwelle des Rotors.

Wird nur der Stator beschrieben, beziehen sich die entsprechenden Begrifflichkeiten vorzugsweise auf die (gedachte) Rotationsachse bei eingesetztem Rotor. Die Begrifflichkeiten können aber auch auf die Ringachse/Symmetrieachse des Stators bzw. Statorkerns bezogen werden, die bevorzugt mit der Rotationsachse zusammenfällt.

Begriffe wie "oben", "unten" und dergleichen beziehen sich vorzugsweise auf die Erstreckung der Rotationsachse des Rotors bzw. Symmetrieachse des Stators oder Statorkerns. Insbesondere bezeichnet "Oberseite" eine axiale Stirnseite des betreffenden Bauteils, insbesondere des Elektromotors, Rotors, Rotorkerns, Stators und/oder Statorkerns, und "Unterseite" bezeichnet die andere bzw. gegenüberliegende axiale Stirnseite des betreffenden Bauteils, insbesondere des Elektromotors, Rotors, Rotorkerns, Stators und/oder Statorkerns.

Die Begriffe werden hierbei gemäß der bevorzugten Ausrichtung des Elektromotors verwendet. Hierbei ist jedoch zu berücksichtigen, dass der Einbau des Elektromotors in eine Küchenmaschine oder eine andere Vorrichtung auch in einer anderen Ausrichtung erfolgen kann.

Weitere Aspekte, Vorteile, Merkmale, Eigenschaften sowie vorteilhafte Weiterbildungen der vorliegenden Erfindung ergeben sich aus den Ansprüchen und der nachfolgenden Beschreibung bevorzugter Ausführungsformen anhand der Figuren. Es zeigen in schematischer, nicht maßstabsgetreuer Darstellung:
- Fig. 1: eine perspektivische Ansicht eines vorschlagsgemäßen Elektromotors mit einem vorschlagsgemäßen Stator und einem Rotor;
- Fig. 2: eine Explosionsdarstellung des Stators gemäß Fig. 1;
- Fig. 3: eine zu Fig. 1 korrespondierende, perspektivische Ansicht eines vorschlagsgemäßen Stators gemäß einer zweiten Ausführungsform;
- Fig. 4: eine Explosionsdarstellung des Stators gemäß Fig. 3;
- Fig. 5: einen Schnitt des Stators gemäß Fig. 3;
- Fig. 6: eine weitere, perspektivische Ansicht des vorschlagsgemäßen Stators gemäß der zweiten Ausführungsform;
- Fig. 7: eine perspektivische Ansicht von Anschlusskontakten des vorschlagsgemäßen Stators;
- Fig. 8: eine Draufsicht des vorschlagsgemäßen Elektromotors mit dem Stator gemäß zweiter Ausführungsform, einer Lagerbrücke und einem Drehwinkelsensor; und
- Fig. 9: eine Seitenansicht einer vorschlagsgemäßen Küchenmaschine.

In den teilweise nicht maßstabsgerechten, nur schematischen Figuren werden für gleiche, gleichartige oder ähnliche Bauteile und Komponenten dieselben Bezugszeichen verwendet, wobei entsprechende oder vergleichbare Eigenschaften oder Vorteile erreicht werden, auch wenn von einer Wiederholung abgesehen wird.

Zur besseren Übersichtlichkeit sind bei gleichen Bauteilen und Komponenten innerhalb einer Figur nicht alle Bauteile/Komponenten mit einem Bezugszeichen versehen.

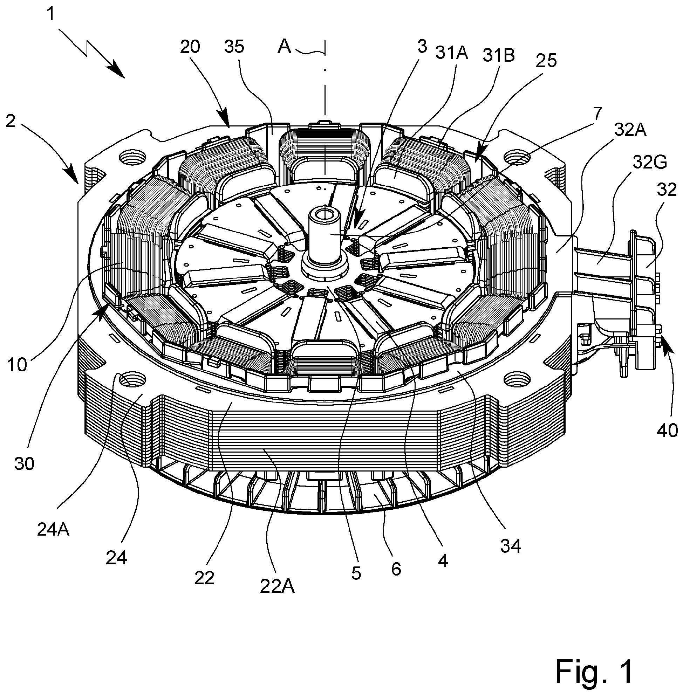

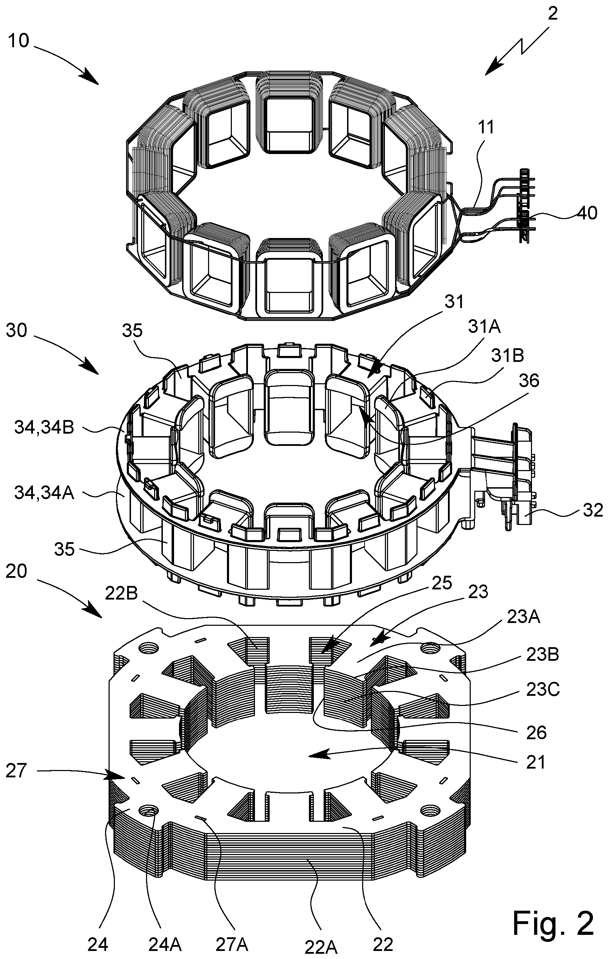

Die in den Figuren 1 und 2 gezeigte, erste Ausführungsform umfasst keine Sensorhalterung und ist daher nicht erfindungsgemäß. Die Ausführungen und Erläuterungen für die erste Ausführungsform gelten auch für die zweite, erfindungsgemäße Ausführungsform, sofern nicht explizit anders erwähnt bzw. auf Unterschiede hingewiesen wird.

Fig. 1 zeigt einen vorschlagsgemäßen Elektromotor 1 in einer schematischen, perspektivischen Darstellung.

Bei der dargestellten Ausführungsform ist der Elektromotor 1 als bürstenloser Gleichstrommotor (BLDC-Motor) ausgebildet. Es sind jedoch grundsätzlich auch andere Lösungen möglich. Insbesondere könnte der vorschlagsgemäße Stator 2 auch bei einem Reluktanzmotor, insbesondere einem geschalteten Reluktanzmotor (SR-Motor), verwendet werden und vorteilhaft sein.

Der vorschlagsgemäße Elektromotor 1 weist vorzugsweise eine große Drehzahlspreizung auf bzw. kann über einen großen Drehzahlbereich betrieben werden. Vorzugsweise ist die minimale Drehzahl kleiner als 100, 50 oder 20 U/min, insbesondere kleiner oder gleich 10 U/min, und/oder ist die maximale Drehzahl größer als 2000, 5000 oder 8000 U/min, insbesondere größer oder gleich 10.000 U/min.

Der Elektromotor 1 weist einen (feststehenden) Stator/Ständer 2 und einen (rotierenden/rotierbaren) Rotor/Läufer 3 auf, wobei der Rotor 3 um eine Rotationsachse A relativ zum Stator 2 drehbar ist.

Wie bereits eingangs erwähnt, beziehen sich Begriffe wie "axial", "radial" und dergleichen vorzugsweise auf die Rotationsachse A.

Optional kann der Elektromotor 1 ein Gehäuse aufweisen bzw. können Stator 2 und/oder Rotor 3 in einem Gehäuse angeordnet sein (nicht dargestellt).

Beim Darstellungsbeispiel ist der Elektromotor 1 als Innenläufer-Motor ausgebildet bzw. ist der Rotor 3 zumindest teilweise innerhalb des Stators 2 angeordnet.

Beim Darstellungsbeispiel gemäß Fig. 1 weist der Rotor 3 vorzugsweise mehrere, hier zehn, Permanentmagnete 4, einen Rotorkern 5, einen Lüfter 6 und/oder eine Welle 7 auf.

Die Permanentmagnete 4 sind vorzugsweise im Rotorkern 5 angeordnet bzw. eingebettet.

Die Permanentmagnete 4 sind vorzugweise sternförmig im Rotor 3 bzw. Rotorkern 5 und/oder um die Welle 7 bzw. Rotationsachse A herum angeordnet und/oder erstrecken sich bzw. haben eine Haupt-/Längserstreckung - bezogen auf die Welle 7 bzw. Rotationsachse A - in radialer Richtung.

Die Permanentmagnete 4 sind vorzugsweise gleichmäßig über einen Kreisumfang verteilt. Benachbarte Permanentmagneten 4 schließen also vorzugsweise einen Winkel von 360° geteilt durch die Anzahl der Permanentmagnete 4 ein.

Grundsätzlich können die Permanentmagnete 4 auch anders als im Darstellungsbeispiel geformt und/oder angeordnet sein, beispielsweise mit einer Längserstreckung in Umfangsrichtung oder senkrecht/tangential zur radialen Richtung.

Der Rotorkern 5 ist vorzugsweise zumindest im Wesentlichen ringförmig, (hohl-)zylindrisch und/oder scheibenförmig ausgebildet. Die Rotationsachse A bildet vorzugsweise eine Symmetrieachse des Rotorkerns 5.

Der Rotorkern 5 ist auf der Welle 7 befestigt, insbesondere kraft-, form- und/oder stoffschlüssig mit der Welle 7 verbunden.

Vorzugsweise umfasst der Rotorkern 5 mehrere gestapelte Elektrobleche bzw. Rotorbleche oder ist daraus gebildet.

Der Lüfter 6 ist vorzugsweise an der Welle 7 befestigt, insbesondere kraft-, formund/oder stoffschlüssig. Zusätzlich oder alternativ kann Der Lüfter 6 an dem Rotorkern 5 befestigt sein, insbesondere kraft-, form- und/oder stoffschlüssig. Auch ist es möglich, dass der Lüfter 6 an den Rotorkern 5 und/oder die Welle 7 angespritzt ist.

Vorzugsweise ist der Lüfter 6 aus Kunststoff hergestellt und/oder einstückig gebildet, insbesondere spritzgegossen.

Der Lüfter 6 ist vorzugsweise scheibenartig oder plattenartig geformt und/oder zumindest im Wesentlichen ringförmig bzw. radförmig ausgebildet und/oder rotationsymmetrisch. Die Rotationsachse A bildet vorzugsweise eine Symmetrieachse des Lüfters 6.

Der Lüfter 6 ist dazu ausgebildet, warme Luft vom Elektromotor 1 (in die Umgebung) wegzutransportieren und/oder kühle Luft (aus der Umgebung) dem Elektromotor 1 zuzuführen.

Als Teil des Rotors 3 rotiert der Lüfter 6 bei Betrieb des Elektromotors 1 um die Rotationsachse A und kann so entsprechend Luft fördern.

Der dargestellte und beschriebene Rotor 3 ist nur beispielhaft. Insbesondere kann der Elektromotor 1 auch als (geschalteter) Reluktanzmotor ausgebildet sein, wie eingangs erwähnt. Der Rotor 3 ist dann entsprechend ausgebildet, weist bei einem Reluktanzmotor beispielsweise keine Permanentmagneten auf.

Fig. 2 zeigt den Stator/Ständer 2 des Elektromotors 1 in einer schematischen Explosionsdarstellung.

Der Stator 2 weist mehrere, hier zwölf, Wicklungen/Spulen 10, einen Statorkern 20, einen Spulenträger 30 und/oder eine Anschlusseinrichtung 40 auf.

Der Statorkern 20 umfasst vorzugsweise mehrere gestapelte Elektrobleche bzw. Statorbleche 27, die mehrere, hier zwölf, Statorzähne bzw. Spulenabschnitte 23 bilden, wobei jede Wicklung/Spule 10 um einen Spulenabschnitt/Statorzahn 23 gewickelt ist und/oder sich jeweils ein Spulenabschnitt/Statorzahn 23 durch eine Spule 10 hindurch erstreckt.

Bei dem vorschlagsgemäßen Stator 2 ist der Spulenträger 30 vorgesehen, der die Spulen 10 trägt, wie in Fig. 1 dargestellt.

Der Spulenträger 30 ist einstückig ausgebildet durch Anspritzen an den Statorkern 20.

Über die Anschlusseinrichtung 40 können die Spulen 10 vorzugsweise mit Strom versorgt werden. Vorzugsweise weist die Anschlusseinrichtung 40 einen oder mehrere elektrische Anschlüsse 41 auf.

Die elektrischen Anschlüsse 41 sind von einer Anschlusshalterung 41 getragen, die einstückig mit dem Spulenträger 30 ist bzw. einen Teil des Spulenträgers 30 bildet.

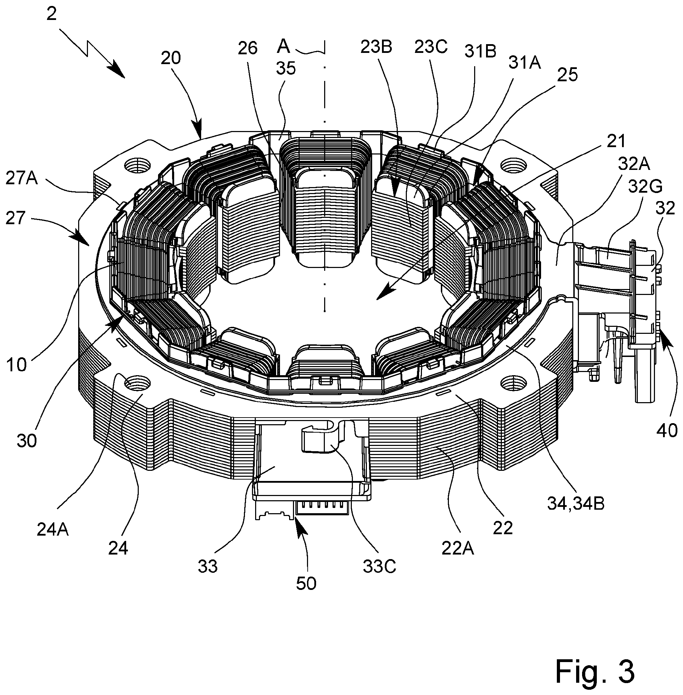

Nachfolgend wird eine erfindungsgemäße, zweite Ausführungsform des Stators 2 anhand von Figuren 3 bis 8 näher beschrieben. Die Ausführungen und Erläuterungen für die erste Ausführungsform gelten auch für die zweite Ausführungsform und umgekehrt, sofern nicht explizit anders erwähnt bzw. auf Unterschiede hingewiesen wird.

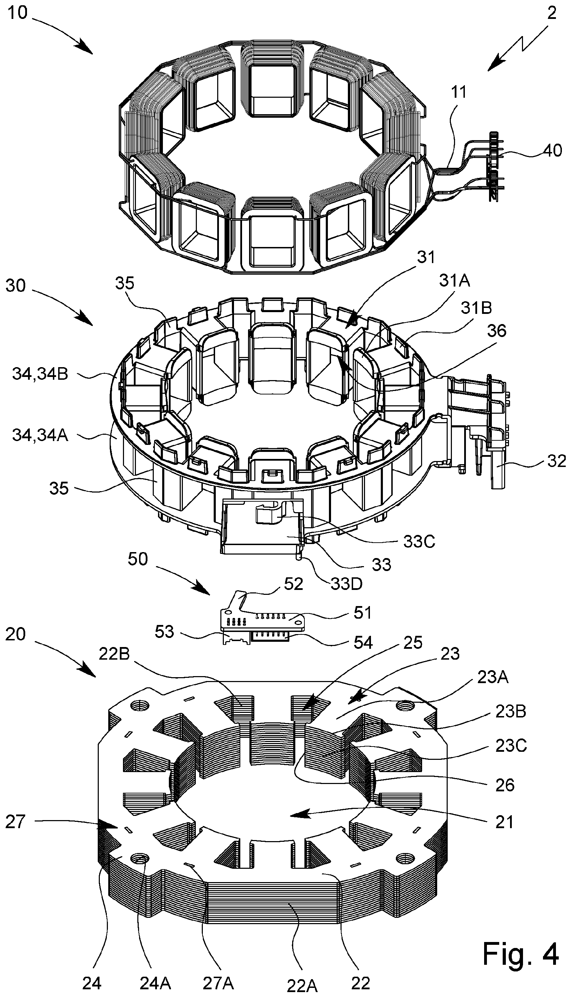

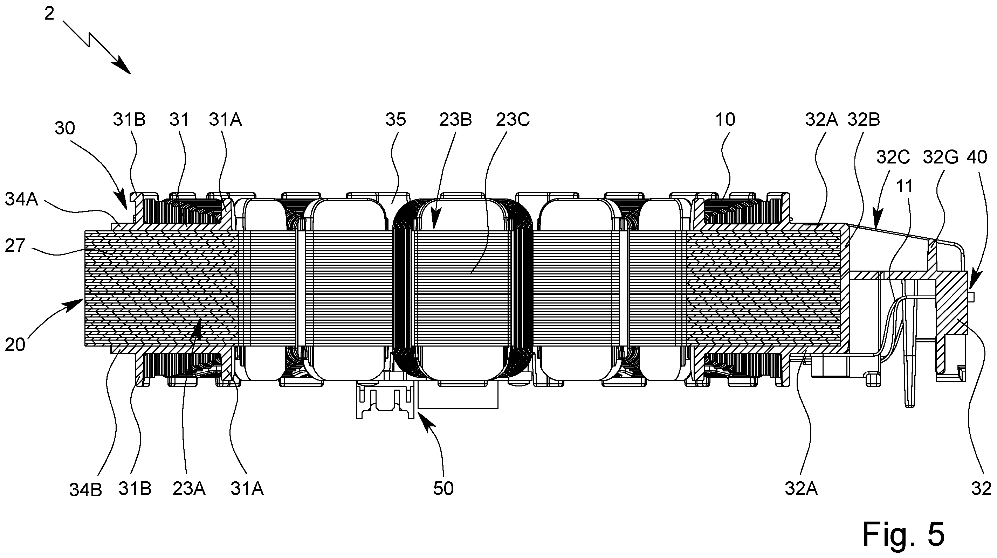

Fig. 3 zeigt den Stator 2 gemäß zweiter Ausführungsform in einer schematischen, perspektivischen Darstellung, die zur Darstellung des Stators 2 gemäß erster Ausführungsform aus Fig. 1 korrespondiert. Fig. 4 zeigt den Stator 2 gemäß zweiter Ausführungsform in einer zu Fig. 2 korrespondierenden, schematischen Explosionsdarstellung. Fig. 5 zeigt einen schematischen Schnitt durch den Stator 2 gemäß zweiter Ausführungsform entlang einer Ebene, in der die Rotationsachse A liegt und die durch die Anschlusshalterung 41 verläuft.

Die nachfolgende Beschreibung des Statorkerns 20 gilt vorzugsweise sowohl für die erste als auch die zweite Ausführungsform oder andere Ausführungsformen mit entsprechendem Statorkern 20.

Der Statorkern 20 ist vorzugsweise zumindest im Wesentlichen ringförmig oder ringartig ausgebildet. Insbesondere weist der Statorkern 20 eine Öffnung 21 für den Rotor 3 auf, die vorzugsweise eine zylindrische Form hat.

Der Stator 2, Statorkern 20 bzw. die Öffnung 21 weist vorzugsweise eine Symmetrieachse bzw. Ringachse bzw. Zylinderachse auf. Hierunter ist vorzugsweise die Achse zu verstehen, die (mittig) durch die Öffnung 21 verläuft bzw. zu der der Statorkern 20 konzentrisch angeordnet ist.

Besonders bevorzugt ist der Statorkern 20 symmetrisch bezüglich einer Drehung um 90° um besagte Achse.

Die Rotationsachse A entspricht vorzugsweise der Symmetrie-, Ring- bzw. Zylinderachse des Stators 2, Statorkerns 20 bzw. der Öffnung 21 bzw. fällt mit dieser zusammen. Dies ist insbesondere in Fig. 1 für die erste Ausführungsform dargestellt, gilt aber vorzugsweise entsprechend auch für die zweite Ausführungsform.

Folglich sind/ist der Stator 2, Statorkern 20 und/oder die Öffnung 21 vorzugsweise symmetrisch zur Rotationsachse A ausgebildet und/oder die Rotationsachse A verläuft mittig durch den Stator 2, Statorkern 20 bzw. die Öffnung 21.

Im Zusammenhang mit dem Stator 2, Statorkern 20 und/oder der Öffnung 21 können die Begriffe "axial", "radial" und dergleichen also vorzugsweise auch als auf deren Symmetrieachse, Ringachse bzw. Zylinderachse bezogen verstanden werden.

Im Folgenden werden der Elektromotor 1 und der Stator 2 daher nur noch im Zusammenhang mit der Rotationsachse A beschrieben. Der Begriff "Rotationsachse A" kann aber in der Beschreibung auch durch die Begriffe "Symmetrieachse", "Ringachse" oder "Zylinderachse" ersetzt werden, insbesondere wenn der Stator 2 bzw. dessen Bauteile beschrieben werden.

Der Statorkern 20 weist vorzugsweise ein zumindest im Wesentlichen ringförmiges Statorjoch 22 auf.

Die Statorzähne 23 ragen bzw. erstrecken sich von dem Statorjoch 22 bzw. einer Innenseite 22B des Statorjochs 22 vorzugsweise (radial) nach innen bzw. in Richtung der Rotationsachse A bzw. des Rotors 3.

Der Statorkern 20 weist vorzugsweise einen oder mehrere, beim Darstellungsbeispiel vier, Vorsprünge 24 auf, die sich (radial) nach außen erstrecken bzw. ragen, insbesondere vom Statorjoch 22 oder einer Außenseite 22A des Statorkerns 20 bzw. Statorjochs 22.

Die Begriffe "außen" und "innen" beziehen sich vorzugsweise auf die Rotationsachse A, die Außenseite 22A ist also vorzugsweise weiter von der Rotationsachse A entfernt als die Innenseite 22B.

Beim Darstellungsbeispiel gemäß erster und zweiter Ausführungsform ist vorzugsweise die Außenseite 22A des Statorjochs 22 achteckig ausgebildet und/oder die Innenseite 22B zwölfeckig. Hierbei bleiben die Ecken/Kanten, die das Statorjoch 22 mit den Statorzähnen 23 bzw. den Vorsprüngen 24 bildet, unberücksichtigt.

Die Außenseite 22A bildet vorzugsweise die äußere Mantelfläche des Statorkerns 20 bzw. Statorjochs 22.

Vorzugsweise weißt die Außenseite 22A sowohl ebene bzw. flache Seitenflächen als auch gekrümmte Seitenflächen auf, die besonders bevorzugt alternierend angeordnet sind. Beim Darstellungsbeispiel einer achteckigen Außenseite 22A, die somit auch acht Seitenflächen aufweist, sind also vorzugsweise vier Seitenflächen eben/flach und vier Seitenflächen gekrümmt.

Die Vorsprünge 24 erstrecken sich vorzugsweise jeweils (mittig) von einer der gerkümmten Seitenflächen nach außen.

Grundsätzlich sind jedoch auch andere Lösungen möglich. Beispielsweise könnten auch alle Seitenflächen eben/flach ausgebildet sein. Alternativ könnte die Außenseite 22A auch rund ausgebildet sein bzw. einen kreisförmigen Querschnitt haben.

Die Seitenflächen der Innenseite 22B sind vorzugsweise alle eben/flach ausgebildet, können bedarfsweise aber auch gekrümmt sein. Vorzugsweise erstreckt sich pro Seitenfläche ein Statorzahn 23.

Beispielhaft sind in den Figuren 1 und 2 der ersten Ausführungsform und den Figuren 3 und 4 der zweiten Ausführungsform unterschiedlich gestaltete Vorsprünge 24 gezeigt. Bei der zweiten Ausführungsform haben die Vorsprünge 24 eine reckteckige Form (im Querschnitt senkrecht zur Rotationsachse A). Bei der ersten Ausführungsform weisen die Vorsprünge 24 zusätzliche Fortsätze an ihrem radial äußeren Ende auf, bzw. sind etwa T-förmig gestaltet.

Der Statorkern 20, insbesondere die Vorsprünge 24, weisen vorzugsweise Schraublöcher 24A auf. Insbesondere weist jeder Vorsprung 24 jeweils ein Schraubloch 24A auf. Die Schraublöcher 24A erstrecken sich vorzugsweise in axialer Richtung durch den Statorkern 20 bzw. die Vorsprünge 24 hindurch.

Bevorzugt erstrecken sich die Schraublöcher 24A vollständig durch den Statorkern 20 bzw. die Vorsprünge 24 hindurch. Es ist jedoch auch möglich, dass sich die Schraublöcher 24A nur bis zu einer gewissen Tiefe in den Statorkern 20 bzw. die Vorsprünge 24 erstrecken. **In** diesem Fall sind vorzugsweise entsprechende Schraublöcher 24A auf beiden axialen Stirnseiten bzw. auf der Ober- und der Unterseite des Statorkerns 20 bzw. der Vorsprünge 24 gebildet.

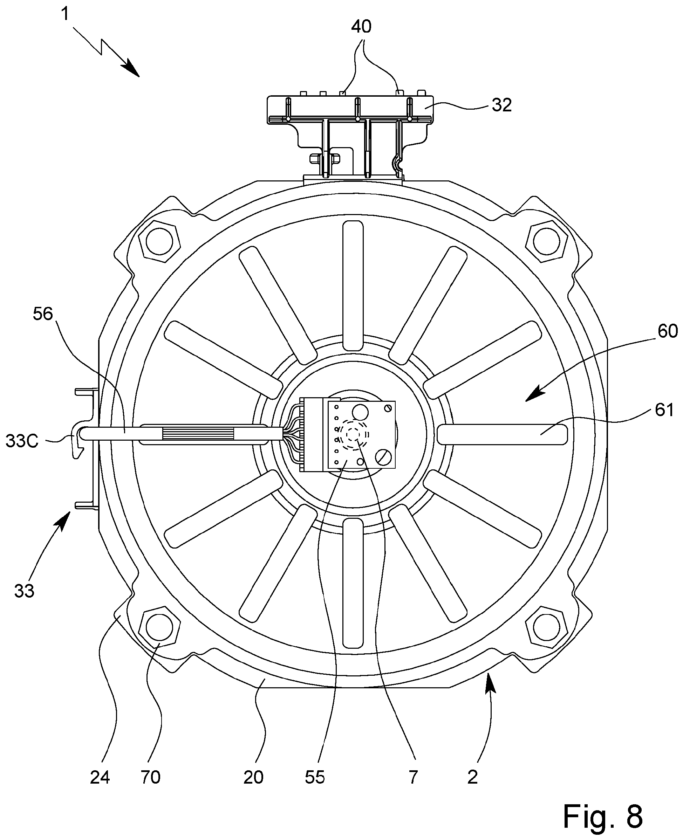

Die Schraublöcher 24A dienen insbesondere dazu, Lagerbrücken 60 am Stator 2 bzw. Statorkern 20 zu befestigen. Dies wird noch später im Zusammenhang mit Fig. 8 näher erläutert. Generell können die Schraublöcher 24A aber auch zur Montage von Gehäuseteilen oder dergleichen dienen.

Die Statorzähne 23 weisen vorzugsweise jeweils einen zumindest im Wesentlichen quaderförmigen Zahnkörper 23A und/oder einen Zahnkopf 23B auf.

Der Zahnkopf 23B ist am freien Ende bzw. dem Statorjoch 22 abgewandten Ende bzw. dem Ende, das der Öffnung 21, der Rotationsachse A bzw. dem Rotor 3 zugewandt ist, des Statorzahns 23 bzw. Zahnkörpers 23A angeordnet.

Die Statorzähne 23, insbesondere deren Zahnköpfe 23B, weisen vorzugsweise jeweils eine (konkav) gekrümmte, der Öffnung 21 bzw. der Rotationsachse A bzw. dem Rotor 3 zugewandte Zahnkopffläche 23C auf.

Die Statorzähne 23, insbesondere die Zahnköpfe 23B bzw. deren Zahnkopfflächen 23C, begrenzen oder definieren vorzugsweise die Öffnung 21 (radial).

Zwischen zwei benachbarten Statorzähnen 23, insbesondere zwischen den Zahnkörpern 23A, ist vorzugsweise jeweils ein Wicklungsraum bzw. Spulenraum 25 gebildet. Die Wicklungsräume 25 dienen insbesondere der Aufnahme der Spulen 10, wie in Fig. 3 dargestellt.

Die Wicklungsräume 25 sind vorzugsweise jeweils durch zwei benachbarte Statorzähne 23, insbesondere deren Zahnkörper 23A und/oder Zahnköpfe 23B, und das Statorjoch 22, insbesondere dessen Innenseite 22B, begrenzt bzw. definiert. Insbesondere sind die Wicklungsräume 25 jeweils in Umfangsrichtung durch zwei benachbarte Zahnkörper 23A begrenzt und/oder in radialer Richtung einerseits durch das Statorjoch 22 bzw. dessen Innenseite 22B und andererseits durch zwei benachbarte Zahnköpfe 23B.

Der Stator 2 bzw. Statorkern 20 weist vorzugsweise (genau) zwölf Wicklungsräume 25 auf.

Benachbarte Zahnköpfe 23B sind vorzugsweise voneinander beabstandet. Insbesondere ist zwischen zwei benachbarten Zahnköpfen 23B ein Schlitz 26 gebildet.

Der Schlitz 26 befindet sich vorzugsweise zwischen der Öffnung 21 und dem jeweiligen Wicklungsraum 25 bzw. bildet einen Übergang von der Öffnung 21 in den jeweiligen Wicklungsraum 25.

Die Statorzähne 23 bzw. Zahnköpfe 23B, insbesondere die Zahnkopfflächen 23C, bilden vorzugsweise eine zumindest im Wesentlichen zylinderförmige, innere Mantelfläche des Statorkerns 20. Diese innere Mantelfläche ist vorzugsweise nicht durchgängig, sondern durch die Schlitze 26 jeweils unterbrochen.

Vorzugsweise hat der Statorkern 20 eine im Wesentlichen konstante Dicke bzw. Höhe bzw. axiale Erstreckung. Insbesondere haben die Komponenten des Statorkerns 20, wie das Statorjoch 22, die Statorzähne 23 und die Vorsprünge 24, zumindest im Wesentlichen die gleiche axiale Erstrekcung.

Die Dicke bzw. Höhe bzw. axiale Erstreckung des Statorkerns 20, insbesondere des Blechpakets aus übereinandergestapelten Statorblechen 27, beträgt vorzugsweise mehr als 10 mm, insbesondere mehr als 15 mm oder 18 mm, und/oder weniger als 30 mm, insbesondere weniger als 25 mm oder 22 mm. Ganz besonders bevorzugt beträgt die Dicke bzw. Höhe bzw. axiale Erstreckung des Statorkerns 20 etwa 20 mm.

Der Innendurchmesser des Statorkerns 20 bzw. der Durchmesser der Öffnung 21 ist vorzugweise größer als 50 mm oder 60 mm, insbesondere größer als 70 mm, und/oder kleiner als 100 mm oder 90 mm, insbesondere kleiner als 85 mm oder 80 mm. Besonders bevorzugt beträgt der Innendurchmesser des Statorkerns 20 bzw. der Durchmesser der Öffnung 21 etwa 77,6 mm.

Der Innendurchmesser des Statorkerns 20 ist vorzugsweise der Abstand von zwei gegenüberliegenden Statorzähnen 23 bzw. deren Zahnköpfen 23B bzw. Zahnkopfflächen 23C.

Der maximale (Außen-)Durchmesser des Statorkerns 20, insbesondere unter Berücksichtigung der Vorsprünge 24, insbesondere der Abstand von der Außenfläche eines Vorsprung 24 zur Außenfläche des gegenüberliegenden Vorsprung 24, beträgt vorzugsweise mindestens 130 mm, insbesondere mindestens 140 mm oder 150 mm, und/oder höchstens 180 mm, insbesondere höchstens 170 mm oder 160 mm, besonders bevorzugt etwa 155 mm.

Der (minimale) Außendurchmesser des Statorkerns 20 bzw. Statorjochs 22 bzw. der Abstand von zwei gegenüberliegenden (flachen/ebenen) Seitenflächen der Außenseite 22A beträgt vorzugsweise mindestens 100 mm, insbesondere mindestens 110 mm oder 120 mm, und/oder höchstens 150 mm, insbesondere höchstens 140 mm, besonders bevorzugt etwa 130 mm oder 131 mm.

Die (minimale) Jochdicke des Statorjochs 22, also die (minimale) Erstreckung des Statorjochs 22 zwischen seiner Außenseite 22A und seiner Innenseite 22B, beträgt vorzugsweise mindestens 5 mm, insbesondere mindestens 6 mm oder 7 mm, und/oder höchstens 15 mm, insbesondere höchstens 12 mm, besonders bevorzugt zwischen 9 mm und 10 mm, ganz besonders bevorzugt etwa 9,45 mm.

Die radiale Erstreckung eines Statorzahns 23, also die Erstreckung vom Statorjoch 22 bis zur Zahnkopffläche 23C, beträgt vorzugsweise mindestens 10 mm, insbesondere mindestens 15 mm, und/oder höchstens 25 mm, insbesondere höchstens 22 mm. Besonders bevorzugt beträgt die radiale Erstreckung etwa 17 mm, ganz besonders bevorzugt 17,25 mm.

Die radiale Erstreckung eines Zahnkopfs 23B bzw. des vom Zahnkopf 23B begrenzten Schlitzes 26 beträgt vorzugsweise mindestens 1 mm und/oder höchstens 3 mm, besonders bevorzugt etwa 2 mm.

Die radiale Erstreckung des Zahnkörpers 23A beträgt demnach besonders bevorzugt 15 mm, ganz besonders bevorzugt 15,25 mm.

Der Zahnkörper 23A hat vorzugsweise eine zumindest im Wesentlichen konstante Breite bzw. Erstreckung in Umfangsrichtung. Die Breite eines Zahnkörpers 23A entspricht vorzugsweise dem Abstand zwischen zwei benachbarten Wickelräumen 25.

Die Breite des Zahnkörpers 23A bzw. des Statorzahns 23 im Bereich zwischen dem Statorjoch 22 und Zahnkopf 23B bzw. der Abstand von zwei benachbarten Wickelräumen 25 beträgt vorzugsweise mindestens 10 mm, insbesondere mindestens 12 mm, und/oder höchstens 20 mm, insbesondere höchstens 18 mm. Besonders bevorzugt beträgt die Breite bzw. der Abstand etwa 14 mm.

Die Breite des Zahnkopfs 23B bzw. die Erstreckung des Zahnkopfs 23B, insbesondere dessen Zahnkopffläche 23C, in Umfangsrichtung ist vorzugsweise größer als die Breite des Zahnkörpers 23A, insbesondere um mehr als 1 mm und/oder weniger als 3 mm. Die Breite eines Zahnkopfs 23B entspricht vorzugsweise dem Abstand zwischen zwei benachbarten Schlitzen 26.

Der Abstand zwischen zwei benachbarten Zahnköpfen 23B bzw. die Breite des Schlitzes 26 bzw. die Erstreckung des Schlitzes 26 in Umfangsrichtung beträgt vorzugsweise mindestens 2 mm und/oder höchstens 6 mm, insbesondere zwischen 4 mm und 5 mm, besonders bevorzugt etwa 4,44 mm.

Wie bereits eingangs erwähnt umfasst der Statorkern 20 vorzugsweise mehrere gestapelte Elektrobleche bzw. Statorbleche 27 oder ist daraus gebildet. Die Statorbleche 27 sind entsprechend geformt bzw. gestanzt, um die zuvor beschriebene Form des Statorkerns 20, insbesondere das Statorjoch 22 und die Statorzähne 23 zu bilden.

Die Form eines einzelnen Statorblechs 27 entspricht vorzugsweise der zuvor beschriebenen Form des Statorkerns 20, mit dem Unterschied, dass das Statorblech 27 nur eine geringe axialer Erstreckung aufweist bzw. flach, insbesondere annähernd zweidimensional, ist. Die vorherigen und folgenden Ausführungen zur Form des Statorkerns 20 oder Teilen davon, beispielsweise der Statorzähne 23, gelten also vorzugsweise auch für die Statorbleche 27.

Vorzugsweise beträgt die Dicke bzw. axiale Erstreckung eines Statorblechs 27 höchstens 1 mm, insbesondere höchstens 0,7 mm und/oder mindestens 0,2 mm, insbesondere mindestens 0,4 mm. Besonders bevorzugt beträgt die Dicke bzw. axiale Erstreckung eines Statorblechs 27 etwa 0,5 mm.

Die Statorbleche 27 sind vorzugsweise jeweils einstückig ausgebildet, insbesondere als ein Stück aus einem (Elektroblech-)Rohling ausgestanzt oder ausgeschnitten.

Die Statorbleche 27 können Verbindungsbereiche bzw. Stanzbereiche 27A zur Verbindung der einzelnen Statorbleche 27 aufweisen. Hierbei handelt es sich bevorzugt um Erhöhungen oder Vertiefungen im jeweiligen Statorblech 27, die für einen definierten Zusammenhalt der Statorbleche 27 sorgen.

Vorzugsweise sind die Stanzbereiche 27A (ausschließlich) am Statorjoch 22 vorgesehen und/oder jeweils links und rechts bzw. benachbart zu einem Schraubloch 24A angeordnet und/oder jeweils mittig zu einem Statorzahn 23 angeordnet.

Beim Darstellungsbeispiel weist jedes Statorblech 27 vorzugsweise acht Stanzbereiche 27A auf. Insbesondere gibt es beim Darstellungsbeispiel vier Statorzähne 23 ohne zugeordneten Stanzbereich 27A.

Die Stanzbereiche 27A sind vorzugsweise punktförmig und/oder linienförmig ausgebildet.

Die Statorbleche 27 werden bzw. wurden vorzugsweise mit einer Kraft von mehr als 30 kN, 40 kN oder 50 kN, und/oder von weniger als 80 kN oder 70 kN, besonders bevorzugt mit einer Kraft von etwa 60 kN, zusammengedrückt bzw. verdichtet, um den Statorkern 20 zu bilden.

Der Statorkern 20 besteht aus oder umfasst vorzugsweise mindestens 30, insbesondere mindestens 35, und/oder vorzugsweise höchstens 50, insbesondere höchstens 45 Statorbleche 27. Besonders bevorzugt besteht der Statorkern 20 aus etwa 40 Statorblechen 27 oder umfasst etwa 40 Statorbleche 27.

Die Anzahl der Statorbleche 27 kann variabel sein. Insbesondere kann hierdurch die Dicke des Statorkerns 20, je nach Anzahl der Statorbleche 27, variiert werden und/oder, bei vorgegebener Dicke des Statorkerns 20, eine Dickentoleranz bei den einzelnen Statorblechen 27 ausgeglichen werden.

Besonders bevorzugt kann die Anzahl der Statorbleche 27 um mehr als ein Blech und/oder um weniger als fünfzehn Bleche, insbesondere um höchstens zehn Bleche, variieren. Die Anzahl der Statorbleche 27 beträgt besonders bevorzugt 40 ± 5 Bleche.

Wie bereits zuvor erläutert, ist der Statorkern 20, und somit auch jedes Statorblech 27, vorzugsweise symmetrisch bezüglich einer Drehung um 90° um die Rotationsachse A. Diese Drehsymmetrie ergibt sich insbesondere aufgrund der vier Vorsprünge 24.

Beim Herstellen des Statorkerns 20 werden die Statorbleche 27 vorzugsweise um jeweils 90° gedreht aufeinandergelegt. Hierdurch werden vorzugsweise Höhenungenauigkeiten der Statorbleche 27 ausgeglichen.

Üblicherweise sind die Statorbleche 27 gewalzt bzw. werden aus gewalztem Elektroblech geschnitten oder gestanzt. Bei einem gewalzten Elektroblech zeigen sich normalerweise kleine Riefen in Walzrichtung. Bei einem Stator 2, dessen Statorbleche 27 während des Stapelns um 90° gedreht werden, wechselt dem zur Folge die Richtung der Riefen auch um 90°. Dieser Herstellungsprozess ist also auch am fertigen Endprodukt erkennbar.

Der Spulenträger 30 weist vorzugsweise mehrere Spulenhalter/Wickelabschnitte 31 für die Spulen 10 und mindestens eine Halterung 32, 33 für eine Sensoreinrichtung 50, optional für eine Anschlusseinrichtung 40 auf.

Beim nicht erfindungsgemäßen Darstellungsbeispiel gemäß erster Ausführungsform, wie in Fig. 1 und Fig. 2 gezeigt, weist der Spulenträger 30 nur eine Anschlusshalterung 32 für eine Anschlusseinrichtung 40 auf, während beim erfindungsgemäßen Darstellungsbeispiel gemäß zweiter Ausführungsform, wie in Fig. 3 bis 6 und 8 gezeigt, sowohl eine Anschlusshalterung 32 für eine Anschlusseinrichtung 40 als auch eine Sensorhalterung 33 für eine Sensoreinrichtung 50 vorgesehen sind. Prinzipiell sind erfindungsgemäß jedoch auch andere Lösungen möglich, beispielsweise eine einzige Halterung für Anschlusseinrichtung 40 und Sensoreinrichtung 50 oder mehr als zwei Halterungen 32, 33, beispielsweise um mehrere Sensoren mittels mehrerer (Sensor-)Halterungen zu halten. Auf die

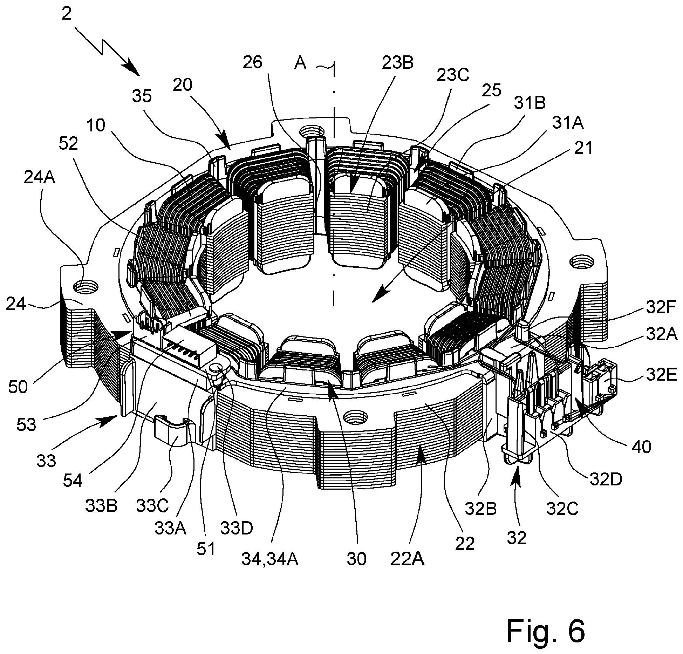

Halterungen 32, 33 und die davon gehaltenen Einrichtungen 40, 50 wird noch später mit Bezug auf Fig. 6 bis 8 näher eingegangen.

Die nachfolgende Beschreibung des Spulenträgers 30 mit Bezug zu den Figuren 1 bis 5 gilt vorzugsweise sowohl für die erste als auch die zweite Ausführungsform oder anderen, entsprechenden Ausführungsformen mit mehr oder weniger Halterungen.

Der Spulenträger 30 ist einstückig ausgebildet, nämlich durch Anspritzen bzw. Umspritzen des Statorkerns 20.

Vorzugsweise ist der Spulenträger 30 aus Kunststoff hergestellt und/oder besteht aus Kunststoff, insbesondere aus Polyamid, besonders bevorzugt Polyamid vom Typ PA6.

Vorzugsweise umgreift, umschließt oder umhüllt der Spulenträger 30 den Statorkern 20, zumindest teilweise. Besonders bevorzugt umschließt bzw. umhüllt der Spulenträger 30 bzw. dessen Wickelabschnitte 31 die Zahnkörper 23A der Statorzähne 23 vollständig.

Der Spulenträger 30 ist vorzugsweise formschlüssig am Statorkern 20 gehalten, insbesondere in alle Raumrichtungen bzw. in axialer Richtung, radialer Richtung und Umfangsrichtung. Der Formschluss ist vorzugsweise so realisiert, dass der Spulenträger 30 (in alle Raumrichtungen) unbeweglich am Statorkern 20 gehalten ist.

Der Spulenträger 30 liegt vorzugsweise direkt am Statorkern 20 an, insbesondere ohne Luftspalte oder dergleichen, wie beispielhaft im Schnitt gemäß Fig. 5 dargestellt.

Besonders bevorzugt ist der Spulenträger 30 stoffschlüssig und/oder adhäsiv mit dem Statorkern 20 verbunden. Dies ist insbesondere durch das Anspritzen/Umspritzen realisiert, bei dem der Kunststoff vorzugsweise am Statorkern 20 anhaftet. Dem Kunststoff kann zusätzlich ein Adhäsionsmittel beigemischt sein, der das Anhaften am Statorkern 20 verstärkt oder erst ermöglicht.

Die Wanddicke des Spulenträgers 30 ist vorzugsweise größer als 1 mm und/oder geringer als 3 mm, insbesondere geringer als 2 mm. Insbesondere ist die Wanddicke des Spulenträgers 30 geringer als bei aus dem Stand der Technik bekannten Lösungen wie einem zweiteiligen Spulenträger, der auf den Statorkern gesteckt wird.

Der Spulenträger 30 weist vorzugsweise pro Statorzahn 23 einen Wickelabschnitt 31 auf, beim Darstellungsbeispiel zwölf Wickelabschnitte 31. Die Wickelabschnitte 31 erstrecken sich vorzugsweise von einem zumindest im Wesentlichen kreisförmigen Kragen 34 (radial) nach innen bzw. in Richtung der Rotationsachse A bzw. des Rotors 3 bzw. entlang der Statorzähne 23, insbesondere der Zahnkörper 23A.

Beim Darstellungsbeispiel weist der Spulenträger 30 vorzugsweise zwei Kragen 34 auf, nämlich einen ersten Kragen 34A und einen zweiten Kragen 34B.

Die Kragen 34A, 34B liegen vorzugsweise (direkt) am Statorkern 20, insbesondere dem Statorjoch 22, an bzw. sind daran angespritzt. Der erste Kragen 34A liegt vorzugsweise (direkt) an einer ersten axialen Stirnseite bzw. Oberseite des Statorkerns 20, insbesondere des Statorjochs 22, an und der zweite Kragen 34B (direkt) an der gegenüberliegenden axialen Stirnseite bzw. Unterseite des Statorkerns 20, insbesondere des Statorjochs 22.

Vorzugsweise ist der Statorkern 20 zwischen dem ersten Kragen 34A und dem zweiten Kragen 34B axial festgelegt bzw. ein axialer Formschluss gebildet.

Vorzugsweise ist der Spulenträger 30 durch die Kragen 34A, 34B in axialer Richtung am Statorkern 20 festgelegt bzw. formschlüssig mit diesem verbunden. Insbesondere liegen die Kragen 34A, 34B jeweils an den axialen Stirnseiten des Statorkerns 20 an und verhindern so eine bzw. jegliche Bewegung des Spulenträgers 30 relativ zum Statorkern 20 in axialer Richtung.

Besonders bevorzugt sind der erste Kragen 34A und/oder der zweite Kragen 34B stoffschlüssig und/oder adhäsiv mit dem Statorkern 20 bzw. Statorjoch 22 verbunden.

Die Kragen 34A und/oder 34B überdecken das Statorjoch 22 vorzugsweise nur teilweise bzw. nicht vollständig.

Zwischen dem ersten und zweiten Kragen 34A, 34B und/oder zwischen zwei benachbarten Wickelabschnitten 31 erstreckt sich vorzugsweise (jeweils) eine Verbindungswand 35. Insbesondere erstreckt sich die jeweilige Verbindungswand 35 in axialer Richtung zwischen den beiden Kragen 34A, 34B und/oder in Umfangsrichtung zwischen den zwei benachbarten Wickelabschnitten 31.

Die Verbindungswände 35 liegen vorzugsweise jeweils (direkt) am Statorkern 20, insbesondere an der Innenseite 22B des Statorjochs 22, an bzw. sind daran angespritzt. Besonders bevorzugt sind die Verbindungswände 35 mit dem Statorkern 20, insbesondere der Innenseite 22B des Statorjochs 22, stoffschlüssig und/oder adhäsiv verbunden.

Vorzugsweise ist der Spulenträger 30 durch die Verbindungswände 35 in radialer Richtung am Statorkern 20 festgelegt bzw. formschlüssig mit diesem verbunden. Insbesondere liegen die Verbindungswände 35 entlang der Innenseite 22B bzw. des Umfangs des Statorjochs 22 daran an und verhindern so eine bzw. jegliche Bewegung des Spulenträgers 30 relativ zum Statorkern 20 in radialer Richtung.

Die Verbindungswände 35 können sich in axialer Richtung über die jeweiligen Kragen 34A, 34B hinaus erstrecken, beispielsweise um Führungsvorsprünge zum Führen von Spulendraht 11 oder dergleichen zu bilden.

Die Wicklungsabschnitt 31 sind vorzugsweise jeweils zumindest im Wesentlichen (hohl-)quaderförmig ausgebildet. Insbesondere weisen die Wicklungsabschnitt 31 jeweils ein Fenster bzw. einen Durchgangsöffnung 36 auf bzw. begrenzen ein Fenster bzw. eine Durchgangsöffnung 36, durch die sich jeweils ein Statorzahn 23 erstreckt.

Der jeweilige Wicklungsabschnitt 31 umschließt, umhüllt oder bedeckt den Zahnkörper 23A vorzugsweise vollständig. Insbesondere bedeckt der jeweilige Wicklungsabschnitt 31 den Zahnkörper 23A axial (von beiden Seiten) und an den jeweiligen den Wicklungsräumen 25 zugewandten Seitenflächen des Zahnkörpers 23A.

Die Wicklungsabschnitte 31 liegen vorzugsweise jeweils (direkt) am Statorkern 20, insbesondere an den jeweiligen Statorzähnen 23 bzw. Zahnkörpern 23A, an bzw. sind daran angespritzt. Besonders bevorzugt sind die Wicklungsabschnitte 31 mit dem Statorkern 20, insbesondere den jeweiligen Statorzähnen 31 bzw. Zahnkörpern 23A, stoffschlüssig und/oder adhäsiv verbunden.

Vorzugsweise ist der Spulenträger 30 durch die Wicklungsabschnitte 31 in axialer Richtung und/oder in Umfangsrichtung am Statorkern 20 festgelegt bzw. formschlüssig mit diesem verbunden. Insbesondere liegen die Wicklungsabschnitte 31 entlang der Statorzähne 23 bzw. Zahnkörper 23A daran an und verhindern so eine bzw. jegliche Bewegung des Spulenträgers 30 relativ zum Statorkern 20 in axialer Richtung und/oder in Umfangsrichtung.

Die Zahnköpfe 23B bzw. deren Zahnkopfflächen 23C ragen vorzugsweise aus den jeweiligen Wicklungsabschnitten 31 bzw. den Durchgangsöffnungen 36 in radialer Richtung hervor. Insbesondere sind die Zahnköpfe 23B und/oder Zahnkopfflächen 23C frei bzw. unbedeckt.

Der Spulenträger 30 bzw. die Wicklungsabschnitte 31 weisen vorzugsweise mehrere Wicklungsvorsprünge 31A, 31B auf, die sich insbesondere in axialer Richtung erstrecken. Die Wicklungsvorsprünge 31A, 31B dienen vorzugsweise als radiale Begrenzung für die Spulen 10.

Beim Darstellungsbeispiel weist jeder Wicklungsabschnitt 31 einen ersten Wicklungsvorsprung 31A und einen zweiten Wicklungsvorsprung 31B auf. Der erste Wicklungsvorsprung 31A erstreckt sich vorzugsweise am freien Ende des Wicklungsabschnitts 31 und/oder der zweite Wicklungsvorsprung 31B am gegenüberliegenden Ende bzw. zwischen dem Wicklungsabschnitt 31 und dem jeweiligen Kragen 34A, 34B. Vorzugsweise weist jeder Wicklungsabschnitt 31 auf jeder axialen Seite jeweils einen ersten und zweiten Wicklungsvorsprung 31A, 31B auf, insgesamt also vorzugsweise vier Wicklungsvorsprünge 31A, 31B.

Die Spulen 10 sind vorzugsweise jeweils zwischen zwei Wicklungsvorsprüngen 31A, 31B (radial) gehalten.

Die Spulen 10 werden vorzugsweise jeweils durch Spulendraht 11 gebildet, der um die jeweiligen Wicklungsabschnitte 31 gewickelt ist.

Die Statorzähne 23 erstrecken sich vorzugsweise durch die Spulen 10 hindurch bzw. sind (mittelbar) von den Spulen 10 umwickelt, wobei sich zwischen den Statorzähnen 23 und den Spulen 10 der Spulenträger 30 bzw. dessen Wickelabschnitte 31 befinden.

Jede Spule 10 weist vorzugsweise mindestens 140, insbesondere mindestens 150 Windungen und/oder höchstens 200, insbesondere höchstens 190 Windungen auf, besonders bevorzugt etwa 170 Windungen. Entsprechend ist vorzugsweise jeder Statorzahn 23 bzw. Zahnkörper 23A mindestens 140 mal, insbesondere mindestens 150 mal und/oder höchstens 200 mal, insbesondere höchstens 190 mal, besonders bevorzugt etwa 170 mal, umwickelt.

Der Spulendraht 11, aus dem die Spulen 10 gebildet bzw. gewickelt sind, ist vorzugsweise aus Kupfer.

Der Spulendraht 11 weist vorzugsweise einen Blankdrahtdurchmesser von mindestens 0,2 mm und/oder höchstens 0,6 mm auf, besonders bevorzugt von etwa 0,4 mm.

Der Spulendraht 11 hat vorzugsweise ein Gesamtgewicht von mehr als 100 g, insbesondere mehr als 150 g, und/oder weniger als 300 g, insbesondere weniger als 250 g, besonders bevorzugt von etwa 200 g.

Beim Darstellungsbeispiel gemäß erster und zweiter Ausführungsform sind vorzugsweise jeweils vier Spulen 10 aus dem gleichen Spulendraht 11 gewickelt, insbesondere zwei benachbarte Spulen 10 und deren jeweils gegenüberliegenden Spulen 10. Die zwölf Spulen 10 des Darstellungsbeispiels lassen sich also vorzugsweise in drei Gruppen einteilen, die insbesondere separat ansteuerbar sind. Es handelt sich vorzugsweise um einen dreiphasigen Elektromotor 1. Generell sind jedoch auch andere Lösungen möglich.

Nachfolgend werden die Halterungen 32, 33, insbesondere mit Bezug auf Fig. 6 bis Fig. 8, näher beschrieben. Die Ausführungen und Erläuterungen bezüglich der Anschlusshalterung 32 gelten vorzugsweise für die erste und die zweite Ausführungsform.

Fig. 6 zeigt den Stator 2 gemäß zweiter Ausführungsform in einer schematischen, perspektivischen Darstellung. Verglichen mit der perspektivischen Darstellung gemäß Fig. 3 ist der Stator 2 in Fig. 6 um 45° um die Rotationsachse A gedreht und von der anderen axialen Stirnseite dargestellt. Insbesondere zeigt Fig. 3 eine perspektivische Sicht auf die eine axiale Stirnseite des Statorkerns 40, an der der zweite Kragen 34B anliegt, und die Fig. 6 die andere axiale Stirnseite des Statorkerns 40, an der der erste Kragen 34A anliegt.

Wie bereits eingangs erwähnt, weist der Spulenträger 30 vorzugsweise eine oder mehrere Halterungen auf, bei der zweiten Ausführungsform vorzugsweise eine Anschlusshalterung 32 und eine Sensorhalterung 33. Generell sind aber auch andere und/oder mehr als zwei Halterungen denkbar.

Generell ist/sind die Halterung(en), insbesondere die Anschlusshalterung 32 und/oder Sensorhalterung 33, radial außen am Statorkern 40 bzw. an der Außenseite 22A des Statorkerns 20 bzw. Statorjochs 22 bzw. an einer dem Rotor 3 bzw. der Öffnung 21 bzw. den Spulen 10 abgewandten Seite des Statorkerns 20 angeordnet. Besonders bevorzugt ist/sind die Halterung(en), insbesondere die Anschlusshalterung 32 und/oder Sensorhalterung 33, (jeweils) an einer der flachen/ebenen Seitenflächen der Außenseite 22A angeordnet. Es können auch mehrere Halterungen an der gleichen Seitenfläche angeordnet sein.

Die Halterung(en), insbesondere die Anschlusshalterung 32 und/oder Sensorhalterung 33, ist/sind vorzugsweise einstückig mit dem Spulenträger 30 gebildet bzw. bildet/bilden (jeweils) einen Teil oder Abschnitt des einstückigen Spulenträgers 30. Prinzipiell bilden die Halterung(en) aber einen unabhängigen Aspekt der Erfindung und können daher auch separat hergestellt und mit dem Spulenträger 30 verbunden sein.

Vorzugsweise ist/sind die Halterung(en), insbesondere die Anschlusshalterung 32 und/oder die Sensorhalterung 33, an den Statorkern 40 angespritzt.

Die Halterung(en), insbesondere die Anschlusshalterung 32 und/oder die Sensorhalterung 33, liegt/liegen vorzugsweise (direkt) am Statorkern 20, insbesondere dem Statorjoch 22 und/oder der Außenseite 22A, an bzw. ist/sind daran angespritzt. Besonders bevorzugt ist/sind die Halterung(en), insbesondere die Anschlusshalterung 32 und/oder die Sensorhalterung 33, mit dem Statorkern 20, insbesondere dem Statorjoch 22 und/oder der Außenseite 22A, stoffschlüssig und/oder adhäsiv verbunden.

Vorzugsweise ist/sind die Halterung(en), insbesondere die Anschlusshalterung 32 und/oder die Sensorhalterung 33, an den Kragen 34A und/oder 34B angeformt bzw. ersteckt/erstrecken sich vom Kragen 34A und/oder 34B radial nach außen.

Die Halterung(en) weisen mindestens einen radialen Abschnitt 32A, 33A und einen axialen Abschnitt 32B, 33B auf.

Der radiale Abschnitt 32A, 33A erstreckt sich entlang einer der axialen Stirnseiten des Statorkerns 20 bzw. Statorjochs 22 radial nach außen bzw. in Richtung der Außenseite 22A, insbesondere vom Kragen 34A und/oder 34B.

Die jeweilige Halterung kann nur einen radialen Abschnitt 32A, 33A an der der Stirnseiten aufweisen oder jeweils einen radialen Abschnitt an beiden Stirnseiten. Beim Darstellungsbeispiel weist die Anschlusshalterung 32 vorzugsweise zwei radiale Abschnitte 32A auf, wobei sich ein radialer Abschnitt 32A vom ersten Kragen 34A erstreckt und ein weiterer radialer Abschnitt 32A vom zweiten Kragen 34B erstreckt. Beim Darstellungsbeispiel weist die Sensorhalterung 33 vorzugsweise nur einen radialen Abschnitt 33A auf, der sich vom ersten Kragen 34A erstreckt. Hier sind jedoch auch andere Lösungen möglich.

Der (jeweilige) radiale Abschnitt 32A, 33A liegt vorzugsweise (direkt) am Statorkern 20, insbesondere dem Statorjoch 22, an bzw. ist daran angespritzt. Besonders bevorzugt ist der (jeweilige) radiale Abschnitt 32A, 33A mit dem Statorkern 20, insbesondere dem Statorjoch 22, stoffschlüssig und/oder adhäsiv verbunden.

Der axiale Abschnitt 32B, 33B erstreckt sich entlang der Außenseite 22A des Statorkerns 20 bzw. Statorjochs 22.

Der axiale Abschnitt 32B, 33B liegt vorzugsweise (direkt) am Statorkern 20 bzw.

Statorjoch 22, insbesondere der Außenseite 22A, an bzw. ist daran angespritzt. Besonders bevorzugt ist der axiale Abschnitt 32B, 33B mit dem Statorkern 20 bzw. Statorjoch 22, insbesondere der Außenseite 22A, stoffschlüssig und/oder adhäsiv verbunden.

Der axiale Abschnitt 32B, 33B und der/die radiale(n) Abschnitt(e) 32A, 33A erstrecken sich vorzugsweise zumindest im Wesentlichen senkrecht zueinander.

Die Sensorhalterung 33 umgreift den Statorkern 20 bzw. das Statorjoch 22, mit ihrem axialen Abschnitt 32B, 33B und radialen Abschnitt(en) 32A, 33A.

Die Halterung(en), insbesondere die Anschlusshalterung 32 und/oder Sensorhalterung 33, erstreckt/erstrecken sich vorzugsweise über die gesamte Höhe bzw. axiale Erstreckung des Statorkerns 20 bzw. Statorjochs 22 bzw. Außenseite 22A, insbesondere mit dem axialen Abschnitt 32B, 33B.

Je nach Halterung kann die Breite der Halterung, also ihre Erstreckung in Umfangsrichtung bzw. tangentialer Richtung bzw. (direkt/anliegend) entlang der Außenseite 22A in die Richtung senkrecht zur axialen Richtung variieren. Beim Darstellungsbeispiel erstreckt sich die Anschlusshalterung 32, insbesondere deren axialer Abschnitt 32B, weniger weit (direkt bzw. anliegend) entlang der Außenseite 22A als die Sensorhalterung 33, insbesondere deren axialer Abschnitt 33B, vorzugsweise um etwa 5 mm weniger. Entsprechendes gilt vorzugsweise für die Erstreckung der Halterungen 32, 33 entlang der axialen Stirnseite des Sensorkerns 20 (in tangentialer Richtung), insbesondere der radialen Abschnitte 32A, 33A.

Vorzugsweise beträgt die entsprechende Breite/Erstreckung der Anschlusshalterung 32, insbesondere des radialen und/oder axialen Abschnitts 32A, 32B, mehr als 20 mm und/oder weniger als 30 mm, und/oder die entsprechende Breite/Erstreckung der Sensorhalterung 33, insbesondere des radialen und/oder axialen Abschnitts 33A, 33B, mehr als 25 mm und/oder weniger als 35 mm. Die Anschlusshalterung 32 kann allerdings einen breiteren, vorstehenden Abschnitt 32C aufweisen, der nicht in direktem Kontakt mit dem Sensorkern 20 ist, wie nachfolgend noch genauer beschrieben.

Die Anlagefläche der Anschlusshalterung 32, insbesondere des axialen Abschnitts 32A, an die Außenseite 22A beträgt vorzugsweise mehr als 400 mm² und/oder weniger als 600 mm². Die Anlagefläche der Sensorhalterung 33, insbesondere des axialen Abschnitts 33A, an die Außenseite 22A beträgt vorzugsweise mehr als 500 mm² und/oder weniger als 700 mm². Besonders bevorzugt ist die Anlagefläche der Sensorhalterung 33 um mindestens 100 mm² größer als die Anlagefläche der Anschlusshalterung 32.

Die Anschlusseinrichtung 40 und die Sensoreinrichtung 50 sind vorzugsweise um 90° versetzt am Sensorkern 20 bzw. der Außenseite 22A angeordnet. Es sind aber auch andere Lösungen denkbar, beispielsweise könnten sich die Anschlusseinrichtung 40 und die Sensoreinrichtung 50 gegenüberliegen.

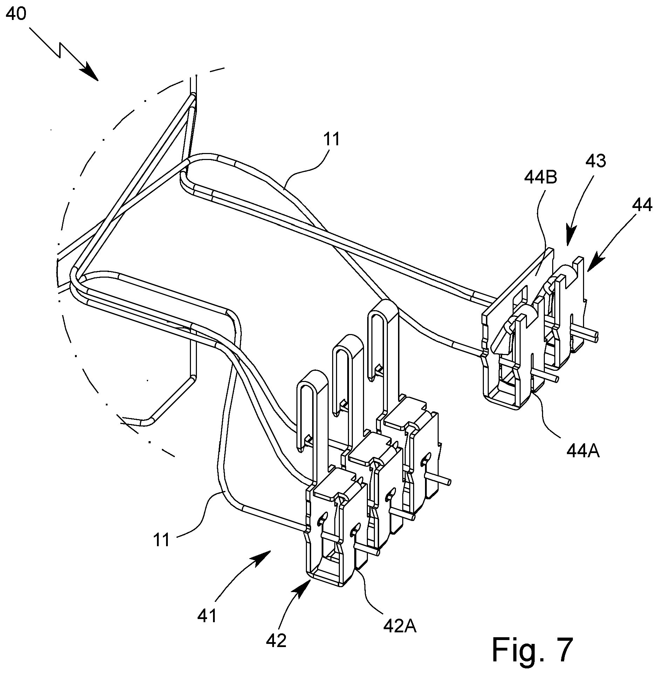

Nachfolgend wird die Anschlusshalterung 32 und die von ihr gehaltene Anschlusseinrichtung 40, insbesondere anhand der Figuren 6 und 7, näher erläutert. Die Erläuterungen gelten vorzugsweise sowohl für die erste als auch die zweite Ausführungsform.

Die Anschlusshalterung 32 hält/trägt die Anschlusseinrichtung 40 oder ist dazu ausgebildet.

Vorzugsweise weist die Anschlusshalterung 32, insbesondere zusätzlich zum radialen Abschnitt 32A und axialen Abschnitt 32B, einen hervorstehenden Abschnitt 32C auf, der die Anschlusseinrichtung 40 hält oder dazu ausgebildet ist.

Der Abschnitt 32C erstreckt sich vorzugsweise vom radialen Abschnitt 32A und/oder axialen Abschnitt 32B radial nach außen. Insbesondere ist der Abschnitt 32C vom Statorkern 20 beabstandet bzw. nicht direkt mit diesem verbunden.

Der Abschnitt 32C ist vorzugsweise balkonartig ausgebildet.

Die Breite bzw. Erstreckung in tangentialer Richtung des Abschnitts 32C ist vorzugsweise größer als die entsprechende Breite/Erstreckung des radialen Abschnitts 32A und/oder axialen Abschnitts 32B, insbesondere um mehr als 10 mm oder 15 mm und/oder weniger als 25 mm.

Generell sind auch Lösungen ohne Abschnitt 32C möglich, bei denen die Anschlusseinrichtung 40 vorzugsweise direkt vom radialen und/oder axialen Abschnitt 32A, 32B gehalten ist.

Fig. 7 zeigt schematisch perspektivisch die Anschlusseinrichtung 40. Die Darstellung entspricht hierbei einer Vergrößerung der Fig. 6, wobei die Anschlusshalterung 32 nicht dargestellt ist.

Die Anschlusseinrichtung 40 weist vorzugsweise einen elektrischen Anschluss bzw. elektrische Anschlusskontakte 41.

Über die elektrischen Anschlusskontakte 41 sind die Spulen 10 vorzugsweise mit Strom und/oder Steuersignalen versorgbar, insbesondere über die Enden der Spulendrähte 11.

Die elektrischen Anschlusskontakte 41 sind vorzugsweise durch eine oder mehrere Klemmen 42, insbesondere Schneidklemmen, gebildet oder weisen diese auf. Die Klemme(n) 42 weisen vorzugsweise (jeweils) einen Klemmschlitz 42A zur leitenden Verbindung mit einem Spulendraht 11 bzw. dessen Ende auf.

Die Klemmen 42 sind vorzugsweise voneinander beabstandet bzw. entsprechend von der Anschlusshalterung 32 beabstandet gehalten, so dass sie voneinander elektrisch isoliert sind.

An jeden Kontakt 41 bzw. jede Klemme 42 kann vorzugsweise eine unterschiedliche Spannung angelegt werden, insbesondere so dass die verschiedenen Spulendrähte 11 und zugehörigen Spulen 10 unterschiedlich angesteuert werden können.

Die Anzahl der Kontakte 41 bzw. Klemmen 42 kann je nach Anzahl der verschiedenen Spulendrähte 11 und/oder abhängig von der Verschaltung der Spulendrähte 11 bzw. der Spulen 10 variieren. Beim Darstellungsbeispiel weist die Anschlusseinrichtung 40 vorzugsweise drei elektrische Anschlusskontakte 41 bzw. Klemmen 42 auf.

Vorzugsweise weist die Anschlusseinrichtung 40 einen Sternpunkt 43 der Verschaltung der Spulendrähte 11 bzw. der Spulen 10 auf. Insbesondere sind die Spulen 10 in einer Sternschaltung miteinander verschaltet. Hierunter ist vorzugsweise zu verstehen, dass die unterschiedlichen Spulendrähte 11 der unterschiedlichen (Gruppen von) Spulen 10, insbesondere an Enden der Spulendrähte 11, miteinander verbunden sind.

Vorzugsweise bildet jeder Spulendraht 11 mit seinem einen Ende einen elektrischen Anschlusskontakt 41 bzw. ist mit einer entsprechenden Klemme 42 elektrisch verbunden und ist mit seinem anderen Ende zum Sternpunkt 43 verbunden.

Beim Darstellungsbeispiel werden vorzugsweise drei (Enden der) Spulendrähte 11 zu einem Sternpunkt miteinander verschaltet.

Die Anschlusseinrichtung 40 weist vorzugsweise, insbesondere zusätzlich zu der/den Klemme(n) 42 für die Anschlusskontakte 41, eine Klemme 44, insbesondere eine Schneidklemme, zur Bildung des Sternpunkts 43 auf.

Die Klemme 44 ist vorzugsweise dazu ausgebildet die (Enden der) Spulendrähte 11 elektrisch miteinander zu verbinden bzw. den Sternpunkt 43 zu bilden.

Vorzugsweise weist die Klemme 44 einen oder mehrere Klemmschlitze 44A zur leitenden Verbindung mit einem oder mehren Spulendrähten 11 auf. Beispielsweise könnte die Klemme 44 einen Klemmschlitz 44A aufweisen, der alle, insbesondere drei, Spulendrähte 11 elektrisch miteinander verbindet. Alternativ kann die Klemme 44 mehrere Klemmschlitze 44A aufweisen. **In** diesem Fall weist die Klemme 44 vorzugsweise eine Kontaktbrücke 44B auf, die die Klemmschlitze 44A und damit die dort geklemmten (Enden der) Spulendrähte 11 elektrisch miteinander verbindet.

Beim Darstellungsbeispiel weist die Klemme 44 zwei Klemmschlitze 44A auf, die durch eine Kontaktbrücke 44B miteinander verbunden sind. Da der Elektromotor 1 bzw. Stator 2 drei verschiedene Spulendrähte 11 bzw. drei Enden der Spulendrähte 11 aufweist, die miteinander zu einem Sternpunkt 43 verschaltet werden sollen, sind zwei Spulendrähte 11 im gleichen Klemmschlitz 44A geklemmt. Die dargestellte Klemme 44 ist bevorzugt, da es sich hierbei um eine Standard-Klemme handelt. Es ist jedoch auch möglich, eine Klemme 44 mit drei Klemmschlitzen 44A oder nur einem Klemmschlitz 44A zu verwenden.

Alternativ zur Klemme 44 kann der Sternpunkt 43 auch dadurch gebildet werden, dass die entsprechenden Enden der Spulendrähte 11 miteinander verlötet oder verschweißt oder anderweitig miteinander elektrisch verbunden werden.

Vorzugsweise weist die Anschlusshalterung 32, insbesondere der vorstehende Abschnitt 32C, einen Kontaktabschnitt 32D auf, der die elektrischen Anschlusskontakte 41 bzw. Klemmen 42 hält/trägt, und/oder einen Sternpunktabschnitt 32E, der den Sternpunkt 43 bzw. die Klemme 43 hält/trägt.

Die Anschlusskontakte 41 und/oder der Sternpunkt 43 sind mittels der Anschlusshalterung 32 radial außen am Stator 2 bzw. Statorkern 20, insbesondere der von den Spulen 10 abgewandeten Seite des Stators 2 bzw. Statorkerns 20, gehalten bzw. angeordnet.

Die Anschlusseinrichtung 40 bzw. die Anschlusskontakte 41 und/oder der Sternpunkt 43 bzw. die Klemme(n) 42 und/oder 44 sind vorzugsweise automatisiert an der Anschlusshalterung 32 montierbar oder montiert. Besonders bevorzugt können die Anschlusskontakte 41 / Klemmen 42 und der Sternpunkt 43 / die Klemme 44 mittels der gleichen Vorrichtung automatisiert an der Anschlusshalterung 32 montiert werden.

Generell ist es auch möglich, zwei Halterungen vorzusehen, wobei eine Halterung die Anschlusskontakte 41 und eine weitere Halterung den Sternpunkt 43 hält. Ferner ist es auch möglich, nur die Anschlusskontakte 41 an der Anschlusshalterung 32 vorzusehen, beispielsweise wenn keine Sternschaltung vorgesehen ist.

Die Anschlusshalterung 32 kann einen oder mehrere Führungsvorsprünge 32F aufweisen, um die der Spulendraht 11 gewickelt bzw. mittels denen der Spulendraht 11, insbesondere zur Anschlusseinrichtung 40, geführt werden kann. Die Führungsvorsprünge 32F können sich beispielsweise in axialer Richtung von dem radialen Abschnitt 32A erstrecken.

Die Anschlusshalterung 32 kann eine oder mehrere Rippen 32G aufweisen, vorzugsweise um die Anschlusshalterung 32, insbesondere den vorstehenden Abschnitt 32C, zu verstärken. Vorzugsweise wird mittels der Rippen 32G verhindert, dass sich die Anschlusshalterung 32, insbesondere der vorstehende Abschnitt 32C, elastisch verbiegen kann.

Die Sensorhalterung 33 hält/trägt die Sensoreinrichtung 50 oder ist dazu ausgebildet.

Die Sensoreinrichtung 50 weist eine Sensorplatte 51, einen Sensor 52 einen elektrischen Anschluss 53 und/oder einen Sensoranschluss 54 auf.

Der elektrische Anschluss 53 ist vorzugsweise ein Anschluss bzw. Kontakt über den die Sensoreinrichtung 50 mit Strom versorgt werden kann und/oder über den elektrische Signale der Sensoreinrichtung 50 bzw. des Sensors 52 abgegriffen bzw. an eine Auswerteeinheit (nicht dargestellt) weitergeleitet werden können.

Der Sensoranschluss 54 ist vorzugsweise ein Anschluss bzw. Kontakt, über den der Sensor 52 oder weiterer Sensor 55, insbesondere mittels eines Sensorkabels 56, an die Sensoreinrichtung 50, insbesondere die Sensorplatte 51, angeschlossen werden kann. Dies wird noch später im Zusammenhang mit Fig. 8 näher erläutert.

Die Sensorplatte 51 ist vorzugsweise eine Leiterplatte oder Platine und/oder dazu ausgebildet, elektrische Signale zu verarbeiten und/oder weiterzuleiten. Es ist aber auch möglich, dass die Sensorplatte 51 lediglich eine (nichtleitende) Montageplatte ist, die einen Sensor 52 und/oder einen Anschluss 53, 54 für einen Sensor trägt.

Vorzugsweise trägt oder bildet die Sensorplatte 51 den Sensor 52, elektrischen Anschluss 53 und/oder Sensoranschluss 54.

Die Sensoreinrichtung 50 oder Teile davon, insbesondere die Sensorplatte 51, der Sensor 52, der elektrische Anschluss 53 und/oder der Sensoranschluss 54, ist/sind vorzugsweise von der Sensorhalterung 33 gehalten bzw. daran befestigt.

Erfindungsgemäß ist der Sensor 52 und/oder die Sensorplatte 51, auf dem axialen Abschnitt 33B der Sensorhalterung 33 befestigt.

Die Sensorhalterung 33 weist vorzugsweise einen oder mehrere Befestigungsabschnitte 33D auf, worüber die Sensoreinrichtung 50, insbesondere der Sensor 52 und/oder die Sensorplatte 51, an der Sensorhalterung 33 befestigt oder befestigbar ist, vorzugsweise formschlüssig und/oder stoffschlüssig.

Beim Darstellungsbeispiel ist der Befestigungsabschnitt 33D als ein Pin bzw. Stift ausgebildet, der zur Befestigung der Sensoreinrichtung 50 mit dieser, insbesondere mit der Sensorplatte 51, heißverstemmt wird/ist. Fig. 4 zeigt den Befestigungsabschnitt 33D beispielhaft vor dem Heißverstemmen, während der Befestigungsabschnitt 33D in Fig. 6 nach dem Heißverstemmen dargestellt ist. Vorzugsweise weist die Sensorhalterung 33 mindestens zwei solcher Befestigungsabschnitte 33D auf.

Es sind aber auch andere Lösungen denkbar, beispielsweise ein Anschrauben oder Ankleben der Sensoreinrichtung 50 bzw. Sensorplatte 51 an die Sensorhalterung 33.

Vorzugsweise weist die Sensorhalterung 33 einen Kabelhalter 33C auf, der zum Halten, Befestigen und/oder Führen eines oder mehrerer Kabel 56 der Sensoreinrichtung 50 ausgebildet ist. Bei dem/den Kabel(n) 56 kann es sich insbesondere um ein Kabel handeln, das an den elektrischen Anschluss 53 und/oder den Sensoranschluss 54 angeschlossen ist bzw. werden kann.

Der Kabelhalter 33C ist vorzugsweise am axialen Abschnitt 33B der Sensorhalterung 33 gebildet und/oder ragt in radialer Richtung nach außen vom axialen Abschnitt 33B bzw. dem Sensorkern 20 bzw. der Außenseite 22 ab.

Vorzugsweise ist der Kabelhalter 33C hakenförmig bzw. als Haken ausgebildet.

Der Kabelhalter 33C kann teilweise elastisch ausgebildet sein, insbesondere so, dass das bzw. die Kabel 56 in den Kabelhalter 33C geklipst werden können.

Die Sensoreinrichtung 50 bzw. der Sensor 52 ist vorzugsweise dazu ausgebildet, Messgrößen der Spulen 10 und/oder des Rotors 3 zu messen. Entsprechend ist der Sensor 52 vorzugsweise im Bereich der Spulen 10 und/oder des Rotors 3 angeordnet.

Beim Darstellungsbeispiel ist der Sensor 52 dazu ausgebildet, Messgrößen der Spulen 10 zu erfassen. Entsprechend erstreckt sich der Sensor 52 über die Spulen 10 bzw. ist axial oberhalb der Spulen 10 angeordnet. Insbesondere weist die Sensoreinrichtung 50 bzw. Sensorplatte 51 bzw. der Sensor 52 einen Arm bzw. armartigen Abschnitt auf, der sich (von der Sensorhalterung 33) in radialer Richtung zur Rotationsachse A hin erstreckt und/oder über eine der Spulen 10 ragt. Im Falle einer Messung von Rotoreigenschaften erstreckt sich die Sensoreinrichtung 50 bzw. der Arm vorzugsweise über die Spulen 10 hinweg bis über den Rotor 3.

Beim Darstellungsbeispiel ist der Sensor 52 vorzugsweise zur Messung der Temperatur des Elektromotors 1, insbesondere im Bereich der Spulen 10, bzw. als Temperatursensor 52 ausgebildet. Besonders bevorzugt ist der Sensor 52 ein NTC-Temperatursensor. Vorzugsweise misst der Sensor 52 die Lufttemperatur in dem Bereich, in dem er angeordnet ist.

Alternativ kann der Sensor 52 zur Erfassung des Drehwinkels des Rotors 3 bzw. als Drehwinkelsensor ausgebildet sein. Dies kann beispielsweise durch eine Lichtschranke realisiert sein und/oder durch einen Hallsensor bzw. ein Hall-Switch Element, der vorzugsweise die Rotorpolarität bestimmt, aus der die Drehzahl des Rotors 3 berechnet werden kann.

Der Sensor 52 kann auch als Hallsensor zur Bestimmung anderer, insbesondere magnetischer, Messgrößen des Elektromotors 1 ausgebildet sein.

Generell ist der Sensor 52 nicht auf einen Temperatursensor, Hallsensor und/oder Drehwinkelsensor beschränkt, sondern kann auch ein sonstiger Sensor sein.

Es ist auch möglich, dass die Sensoreinrichtung 50 mehrere Sensoren 52 aufweist und/oder mehrere Sensoren 52 von der Sensorhalterung 33 gehalten werden bzw. daran befestigt sind. Alternativ oder zusätzlich kann der Spulenträger 30 auch mehrere Sensorhalterungen 33 aufweisen, wobei jede Sensorhalterung 33 einen oder mehrere Sensoren hält/trägt.

Generell ist es auch möglich, dass nur eine Halterung vorgesehen ist, die sowohl die Anschlusseinrichtung 40 als auch die Sensoreinrichtung 50 hält/trägt.

Wie bereits zuvor erwähnt, muss der Sensor der Sensoreinrichtung 50 nicht direkt bzw. unmittelbar an der Sensorhalterung 33 befestigt sein. Es ist auch möglich, dass die Sensorhalterung 33 lediglich den Sensoranschluss 54 unmittelbar hält/trägt, an die ein Sensor angeschlossen oder anschließbar ist. Dies ist schematisch in Fig. 8 gezeigt.

Fig. 8 zeigt den Elektromotor 1 in einer schematischen Draufsicht. Hierbei ist der Elektromotor 1 mit einer Lagerbrücke 60 gezeigt, die insbesondere zur Lagerung der Welle 7 ausgebildet ist.

Die Lagerbrücke 60 ist vorzugsweise am Stator 2 befestigt und/oder der Stator 2 weist die Lagerbrücke 60 auf. Insbesondere ist die Lagerbrücke 60 mittels Befestigungselementen 70, insbesondere Schrauben, am Statorkern 20 befestigt, insbesondere angeschraubt. Vorzugsweise werden/sind zur Befestigung der Lagerbrücke 60 die Schraublöcher 24A des Statorkerns 20 bzw. der Vorsprünge 24 verwendet.

Die Lagerbrücke 60 weist vorzugsweise mehrere Rippen 61, insbesondere Verstärkungs- bzw. Versteifungsrippen, auf. Ferner kann die Lagerbrücke 60 auch Ausnehmungen, insbesondere zwischen den Rippen 61, aufweisen (nicht dargestellt), insbesondere um eine Belüftung des Elektromotors 1 zu gewährleisten.

Der Elektromotor 1, insbesondere der Stator 2, weist vorzugsweise zwei Lagerbrücken 60 auf, wobei die zweite Lagerbrücke 60 an der gegenüberliegenden, in Fig. 8 nicht sichtbaren, axialen Seite des Statorkerns 20 befestigt ist.

Beim Darstellungsbeispiel gemäß Fig. 8 weist die Sensoreinrichtung 50 vorzugsweise einen im Bereich der Welle 7 bzw. mittig am Elektromotor 1 bzw. Stator 2 angeordneten Sensor 55 auf.

Der Sensor 55 ist vorzugsweise als Hallsensor und/oder Drehwinkelsensor, insbesondere zur Erfassung der Rotation des Rotors 3 bzw. der Welle 7, ausgebildet. Der, insbesondere als Hallsensor ausgebildete, Sensor 55 kann auch zur Messung anderer Messgrößen vorgesehen sein bzw. verwendet werden.

Der Sensor 55 ist vorzugsweise an der Lagerbrücke 60 befestigt bzw. von der Lagerbrücke 60 gehalten.

Die Sensoreinrichtung 50 weist vorzugsweise ein Sensorkabel 56 zum Anschluss des Sensors 55 auf, insbesondere zur Weiterleitung elektrischer Signale des Sensors 55. Vorzugsweise verbindet das Sensorkabel 56 den Sensor 55 mit dem Sensoranschluss 54.

Das Sensorkabel 56 ist vorzugsweise vom Kabelhalter 33C gehalten bzw. geführt. Insbesondere führt der Kabelhalter 33C das Sensorkabel 56 zum Sensoranschluss 54.

**In** diesem Sinne kann unter einer Sensorhalterung 33 für eine Sensoreinrichtung 50 vorzugsweise auch eine Halterung verstanden werden, die nicht direkt einen Sensor trägt/hält, sondern nur Teile davon, wie eine Leiterplatte 51, einen Anschluss 53, 54 und/oder ein Sensorkabel 56.

Besonders bevorzugt weist die Sensoreinrichtung 50 sowohl den Sensor 52, insbesondere Temperatursensor, als auch den Sensor 55, insbesondere Hallsensor, auf. Die Signale der beiden Sensoren 52, 55 werden vorzugsweise an der Leiterplatte 51 und/oder über den Sensoranschluss 54 zusammengeführt.

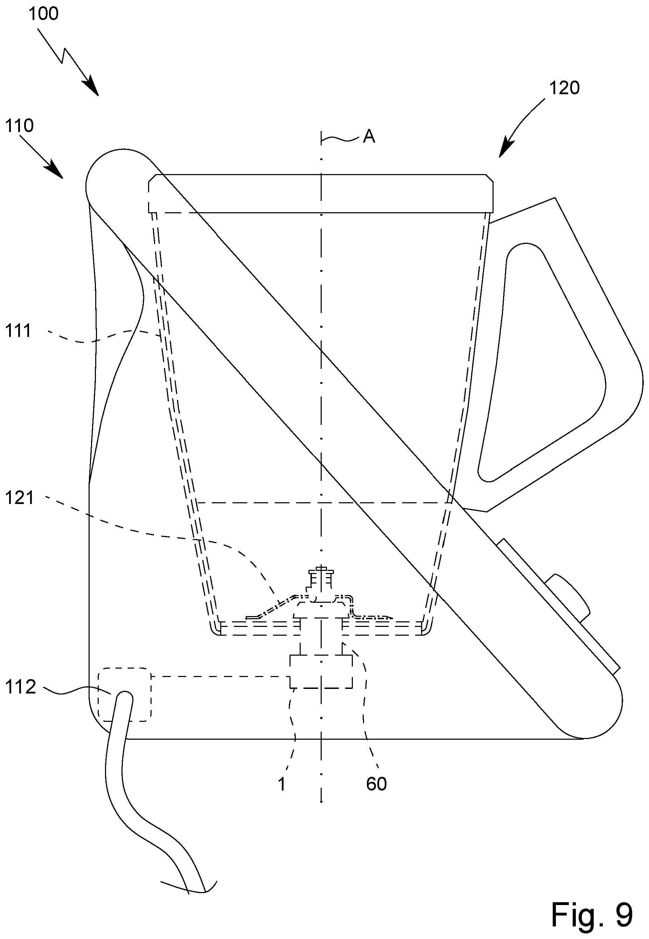

Fig. 9 zeigt schematisch eine vorschlagsgemäße Küchenmaschine 100 zur Zubereitung von Speisen bzw. Bearbeitung von Lebensmitteln. Bei der Küchenmaschine 100 handelt es sich vorzugsweise um eine elektrisch betriebene Multifunktions-Küchenmaschine, die zum Zerkleinern, Rühren bzw. Mischen und/oder Erhitzen bzw. Kochen von Lebensmitteln ausgebildet ist.

Die Küchenmaschine 100 weist vorzugsweise eine Basisstation 110 und/oder ein Gefäß 120 zur Aufnahme von Lebensmitteln auf.

Die Basisstation 110 und das Gefäß 120 sind vorzugsweise elektrisch und/oder mechanisch verbunden oder verbindbar, insbesondere um ein Erhitzen und/oder Mischen/Umrühren des Lebensmittels in dem Gefäß 120 zu ermöglichen.

Fig. 9 zeigt die Küchenmaschine 100 im üblichen Gebrauchszustand bzw. in der Anschlussposition, in der das Gefäß 120 elektrisch und/oder mechanisch an die Basisstation 110 angeschlossen ist.

Die Basisstation 110 weist vorzugsweise eine Aufnahme 111 auf, um das Gefäß 120 zumindest teilweise und/oder bodenseitig aufzunehmen. Besonders bevorzugt ist das Gefäß 120 zumindest teilweise in die Basisstation 110 einsetzbar oder einhängbar, um das Gefäß 120 mechanisch und/oder elektrisch mit der Basisstation 110 zu verbinden.

Das Gefäß 120 ist mit einem Rührer 121 ausgestattet, insbesondere um Lebensmittel im Gefäß 120 zu zerkleinern und/oder zu mischen. Der Rührer 121 ist vorzugsweise am Boden des Gefäßes 120 angeordnet bzw. drehbar gelagert. Der Rührer 121 weist vorzugsweise mehrere, insbesondere austauschbare, Rührblätter auf.

Vorzugsweise weisen die Rührblätter Schneiden auf oder sind als Schneiden ausgebildet, um Lebensmittel zu zerkleinern.

Das Gefäß 120 ist mechanisch mit der Basisstation 110 verbunden oder verbindbar, um den Rührer 121 mittels der Basisstation 110 anzutreiben.

Zum Antrieb des Rührers 121 weist die Küchenmaschine 100, insbesondere die Basisstation 110, den Elektromotor 1 auf, der über die Welle 7 - optional über einen Wellenaufsatz - mit dem Rührer 121 verbunden oder verbindbar ist und/oder - in der Anschlussposition - von unten formschlüssig in den Boden des Gefäßes 120 eingreift.

Vorzugsweise entspricht die Rotationsachse A des Elektromotors 1 der Drehachse des Rührers 121 und/oder einer Mittelachse des Gefäßes 120, die mittig durch das Gefäß 120 verläuft, wie in Fig. 9 angedeutet.

Vorzugsweise ist die Mittelachse eine Längs- oder Symmetrieachse des vorzugsweise länglichen, zylindrischen und/oder zumindest im Wesentlichen rotationssymmetrischen Gefäßes 120.

Die Küchenmaschine 100, insbesondere die Basisstation 110, weist vorzugsweise eine Stromversorgung 112 auf, um den Elektromotor 1, insbesondere dessen Spulen 11, und/oder andere Einrichtungen der Küchenmaschine 100 mit elektrischem Strom zu versorgen.

Abhängig von der Drehgeschwindigkeit bzw. Drehzahl des Rührers 121 bzw. Elektromotors 1 ist die Küchenmaschine 100 vorzugsweise sowohl zum Rühren (bei kleinen Drehzahlen) als auch zum Zerkleinern (bei großen Drehzahlen) von Zutaten ausgebildet. Besonders bevorzugt ist auch ein langsames Rühren, beispielsweise mit 10 U/min und/oder ein sehr feines bzw. definiertes Zerkleinern, beispielsweise mit 10.000 U/min möglich.

Einzelne Aspekte, Merkmale und/oder Verfahrensschritte der vorliegenden Erfindung können unabhängig, aber auch in beliebiger Kombination und/oder Reihenfolge realisiert werden.

### Bezugszeichenliste:

- 1: Elektromotor

- 2: Stator

- 3: Rotor
- 4: Permanentmagnet
- 5: Rotorkern
- 6: Lüfter
- 7: Welle

- 10: Spulen
- 11: Spulendraht

- 20: Statorkern
- 21: Öffnung
- 22: Statorjoch
- 22A: Außenseite
- 22B: Innenseite
- 23: Statorzahn
- 23A: Zahnkörper
- 23B: Zahnkopf
- 23C: Zahnkopffläche
- 24: Vorsprung
- 24A: Schraubloch
- 25: Wicklungsraum
- 26: Schlitz
- 27: Statorblech
- 27A: Stanzbereich

- 30: Spulenträger
- 31: Wickelabschnitt
- 32: Anschlusshalterung
- 32A: radialer Abschnitt
- 32B: axialer Abschnitt
- 32C: vorstehender Abschnitt
- 32D: Kontaktabschnitt
- 32E: Sternpunktabschnitt
- 32F: Führungsvorsprung
- 32G: Rippe
- 33: Sensorhalterung
- 33A: radialer Abschnitt
- 33B: axialer Abschnitt
- 33C: Kabelhalter
- 33D: Befestigungsabschnitt
- 34A: erster Kragen
- 34B: zweiter Kragen
- 35: Verbindungswand
- 36: Durchgangsöffnung

- 40: Anschlusseinrichtung
- 41: elektrische Anschlusskontakte
- 42: Klemme (elektrischer Anschluss)
- 42A: Klemmschlitz
- 43: Sternpunkt
- 44: Klemme (Sternpunkt)
- 44A: Klemmschlitz
- 44B: Kontaktbrücke

- 50: Sensoreinrichtung
- 51: Sensorplatte
- 52: Sensor (Temperatursensor)
- 53: elektrischer Anschluss
- 54: Sensoranschluss
- 55: Sensor (Hallsensor)
- 56: Sensorkabel

- 60: Lagerbrücke
- 61: Rippe
- 70: Befestigungselement

- 100: Küchenmaschine
- 110: Basisstation
- 111: Aufnahme
- 112: Stromversorgung
- 120: Gefäß
- 121: Rührer

- A: Rotationsachse

## Patentansprüche

1. Elektromotor (1), insbesondere für eine Küchenmaschine (100), mit einem Rotor (3) und einem Stator (2), wobei der Rotor (3) um eine Rotationsachse (A) relativ zum Stator (2) drehbar ist,
wobei der Stator (2) einen Statorkern (20), mehrere Spulen (10) und einen Spulenträger (30) für die Spulen (10) aufweist, und
wobei der Spulenträger (30) einstückig durch Anspritzen an den Statorkern (20) hergestellt ist,
**dadurch gekennzeichnet,**
**dass** der Spulenträger (30) mindestens eine radial außen am Statorkern (20) angeordnete Halterung (33) aufweist, die eine Sensoreinrichtung (50) hält,
wobei die Halterung (33) einen radialen Abschnitt (33A) und einen axialen Abschnitt (33B) aufweist, und den Statorkern (20) mit ihrem axialen Abschnitt (33B) und radialen Abschnitt (33A) umgreift,
wobei sich der radiale Abschnitt (33B) entlang einer der axialen Stirnseiten des Statorkerns (20) radial nach außen erstreckt, und wobei sich der axiale Abschnitt (33B) entlang einer Außenseite (22A) des Statorkerns (20) erstreckt,
wobei die Sensoreinrichtung (52) einen Sensor (52) aufweist, der dazu ausgebildet ist, Messgrößen der Spulen (10) zu erfassen, und
wobei der Sensor (52) von der Halterung (33) gehalten und axial oberhalb der Spulen (10) angeordnet ist.

2. Elektromotor nach Anspruch 1, wobei die Sensoreinrichtung (50) einen Temperatursensor (52), insbesondere einen NTC-Temperatursensor, und/oder einen Hallsensor (55), insbesondere zur Drehwinkelerfassung, aufweist.

3. Elektromotor nach einem der voranstehenden Ansprüche, wobei die Sensoreinrichtung (50) oder eine Sensorplatte (51) der Sensoreinrichtung (50) mit der Halterung (33) heißverstemmt ist.

4. Elektromotor nach einem der voranstehenden Ansprüche, wobei die Halterung (33) einen, insbesondere hakenförmigen, Kabelhalter (33C) für ein Kabel der Sensoreinrichtung (50) bildet.

5. Elektromotor nach einem der voranstehenden Ansprüche, wobei der Spulenträger (30) stoffschlüssig und/oder adhäsiv mit dem Statorkern (20) verbunden ist.

6. Elektromotor nach einem der voranstehenden Ansprüche, wobei der Spulenträger (30) den Statorkern (20) umgreift und/oder in axialer Richtung, in radialer Richtung und in Umfangsrichtung einen Formschluss mit dem Statorkern (20) bildet.

7. Elektromotor nach einem der voranstehenden Ansprüche, wobei der Spulenträger (30) mehrere, insbesondere genau zwei, voneinander beabstandete Halterungen (32, 33) aufweist, die jeweils radial außen am Statorkern (20) angeordnet sind.

8. Elektromotor nach Anspruch 7, wobei eine der Halterungen (32, 33) als Anschlusshalterung (32) ausgebildet ist und eine Anschlusseinrichtung (40) hält, und wobei eine andere der Halterungen (32, 33) als Sensorhalterung (33) ausgebildet ist und die Sensoreinrichtung (50) hält.

9. Elektromotor nach einem der Ansprüche 1 bis 6, wobei die Halterung (33) eine Anschlusseinrichtung (40) hält.

10. Elektromotor nach Anspruch 8 oder 9, wobei die Anschlusseinrichtung (40) elektrische Anschlusskontakte (41) für die Spulen (10) und/oder einen Sternpunkt (43) einer Verschaltung der Spulen (10) aufweist, insbesondere wobei die Anschlusseinrichtung (40) eine Klemme (44) aufweist, die den Sternpunkt (43) bildet.

11. Elektromotor nach einem der voranstehenden Ansprüche,
wobei der Stator (2) genau zwölf Spulen (10) und/oder der Statorkern (20) genau zwölf Statorzähne (23) für die Spulen (10) aufweist, und/oder
wobei der Statorkern (20) einen Innendurchmesser von mindestens 70 mm und/oder höchstens 85 mm hat, und/oder
wobei der Statorkern (20) einen Außendurchmesser von mindestens 120 mm und/oder höchstens 165 mm hat, und/oder
wobei der Statorkern (20) eine Höhe von mindestens 15 mm und/oder höchstens 25 mm hat, und/oder
wobei der Statorkern (20) eine Jochdicke von mindestens 6 mm und/oder höchstens 12 mm hat, und/oder
wobei der Statorkern (20) mehrere, insbesondere genau zwölf, Statorzähne (23) aufweist, wobei jeder Statorzahn (23) eine radiale Erstreckung von mindestens 10 mm und/oder höchstens 22 mm und/oder eine Erstreckung in Umfangsrichtung von mindestens 10 mm und/oder höchstens 20 mm hat, und/oder
wobei der Statorkern (20) mehrere, insbesondere genau zwölf, Statorzähne (23) aufweist, wobei jeweils zwischen zwei Statorzähnen (23) ein Schlitz (26) gebildet ist, der eine Breite von mindestens 3 mm und/oder höchstens 6 mm hat, und/oder
wobei der Statorkern (20) durch mindestens 35 und/oder höchstens 45 übereinandergelegte Statorbleche (27) gebildet ist, und/oder
wobei die Spulen (10) jeweils mindestens 150 Windungen und/oder höchstens 190 Windungen und/oder einen Blankdrahtdurchmesser von mindestens 0,2 mm und/oder höchstens 0,6 mm aufweisen, und/oder
wobei der Spulenträger (30) aus Polyamid, insbesondere vom Typ PA6, hergestellt ist.

12. Küchenmaschine (100) mit einem Elektromotor (1) nach einem der voranstehenden Ansprüche.

13. Verfahren zur Herstellung eines Elektromotors (1) nach einem der Ansprüche 1 bis 11 mit einem Stator (2) und einem relativ zum Stator (2) um eine Rotationsachse (A) drehbaren Rotor (3), wobei ein Spulenträger (30) des Stators (2) durch Anspritzen an einen Statorkern (20) hergestellt wird,
**dadurch gekennzeichnet,**
**dass** der Spulenträger (30) mit mindestens einer Halterung (33) hergestellt wird, die radial außen am Statorkern (20) angeordnet und dazu ausgebildet ist, eine Sensoreinrichtung (50) zu halten,
wobei die Halterung (33) einen radialen Abschnitt (33A) und einen axialen Abschnitt (33B) aufweist, und den Statorkern (20) mit ihrem axialen Abschnitt (33B) und radialen Abschnitt (33A) umgreift,
wobei sich der radiale Abschnitt (33B) entlang einer der axialen Stirnseiten des Statorkerns (20) radial nach außen erstreckt, und wobei sich der axiale Abschnitt (33B) entlang einer Außenseite (22A) des Statorkerns (20) erstreckt,
wobei die Sensoreinrichtung (52) einen Sensor (52) aufweist, der dazu ausgebildet ist, Messgrößen der Spulen (10) zu erfassen, und
wobei der Sensor (52) von der Halterung (33) gehalten und axial oberhalb der Spulen (10) angeordnet wird.

14. Verfahren nach Anspruch 13, wobei der Spulenträger (30) so hergestellt wird, dass er den Statorkern (20) umgreift und/oder stoffschlüssig und/oder adhäsiv mit dem Statorkern (20) verbunden ist und/oder in axialer Richtung, in radialer Richtung und in Umfangsrichtung einen Formschluss mit dem Statorkern (20) bildet.

15. Verfahren nach Anspruch 13 oder 14, wobei die Sensoreinrichtung (50) oder eine Sensorplatte (51) der Sensoreinrichtung (50) mit der Halterung (33) heißverstemmt wird.

## Claims

1. Electric motor (1), in particular for a food processor (100), having a rotor (3) and a stator (2), wherein the rotor (3) is rotatable about an axis of rotation (A) relative to the stator (2),
wherein the stator (2) has a stator core (20), a plurality of coils (10) and a coil carrier (30) for the coils (10), and
wherein the coil carrier (30) is produced in one piece by injection-moulding onto the stator core (20),
**characterized**
**in that** the coil carrier (30) has at least one holder (33) which is arranged radially on the outside of the stator core (20) and holds a sensor device (50),
wherein the holder (33) has a radial portion (33A) and an axial portion (33B), and engages around the stator core (20) with its axial portion (33B) and radial portion (33A),
wherein the radial portion (33B) extends radially outwards along one of the axial end sides of the stator core (20), and wherein the axial portion (33B) extends along an outer side (22A) of the stator core (20),
wherein the sensor device (52) has a sensor (52) which is designed to detect measured variables of the coils (10), and
wherein the sensor (52) is held by the holder (33) and is arranged axially above the coils (10).

2. Electric motor according to claim 1, wherein the sensor device (50) has a temperature sensor (52), in particular an NTC temperature sensor, and/or a Hall sensor (55), in particular for detecting the angle of rotation.

3. Electric motor according to either of the preceding claims, wherein the sensor device (50) or a sensor plate (51) of the sensor device (50) is heat-staked with the holder (33).

4. Electric motor according to any of the preceding claims, wherein the holder (33) forms a, in particular hook-shaped, cable holder (33C) for a cable of the sensor device (50).

5. Electric motor according to any of the preceding claims, wherein the coil carrier (30) is cohesively and/or adhesively connected to the stator core (20).

6. Electric motor according to any of the preceding claims, wherein the coil carrier (30) engages around the stator core (20) and/or forms a form fit with the stator core (20) in the axial direction, in the radial direction and in the circumferential direction.

7. Electric motor according to any of the preceding claims, wherein the coil carrier (30) has a plurality of, in particular precisely two, holders (32, 33) which are spaced apart from one another and are each arranged radially on the outside of the stator core (20).

8. Electric motor according to claim 7, wherein one of the holders (32, 33) is designed as a connection holder (32) and holds a connection device (40), and wherein another of the holders (32, 33) is designed as a sensor holder (33) and holds the sensor device (50).

9. Electric motor according to any of claims 1 to 6, wherein the holder (33) holds a connection device (40).

10. Electric motor according to claim 8 or 9, wherein the connection device (40) has electrical connection contacts (41) for the coils (10) and/or a star point (43) of an interconnection of the coils (10), in particular wherein the connection device (40) has a terminal (44) which forms the star point (43).

11. Electric motor according to any of the preceding claims,
wherein the stator (2) has precisely twelve coils (10) and/or the stator core (20) has precisely twelve stator teeth (23) for the coils (10), and/or
wherein the stator core (20) has an internal diameter of at least 70 mm and/or at most 85 mm, and/or
wherein the stator core (20) has an external diameter of at least 120 mm and/or at most 165 mm, and/or
wherein the stator core (20) has a height of at least 15 mm and/or at most 25 mm, and/or
wherein the stator core (20) has a yoke thickness of at least 6 mm and/or at most 12 mm, and/or
wherein the stator core (20) has a plurality of, in particular precisely twelve, stator teeth (23), wherein each stator tooth (23) has a radial extent of at least 10 mm and/or at most 22 mm and/or an extent in the circumferential direction of at least 10 mm and/or at most 20 mm, and/or
wherein the stator core (20) has a plurality of, in particular precisely twelve, stator teeth (23), wherein a slot (26) which has a width of at least 3 mm and/or at most 6 mm is formed in each case between two stator teeth (23), and/or
wherein the stator core (20) is formed by at least 35 and/or at most 45 stator laminations (27) which are laid one on top of the other, and/or
wherein the coils (10) each have at least 150 turns and/or at most 190 turns and/or a bare wire diameter of at least 0.2 mm and/or at most 0.6 mm, and/or
wherein the coil carrier (30) is produced from polyamide, in particular of the PA6 type.

12. Food processor (100) having an electric motor (1) according to any of the preceding claims.

13. Method for producing an electric motor (1) according to any of claims 1 to 11 having a stator (2) and a rotor (3) which is rotatable about an axis of rotation (A) relative to the stator (2),
wherein a coil carrier (30) of the stator (2) is produced by injection-moulding onto a stator core (20),
**characterized**
**in that** the coil carrier (30) is produced with at least one holder (33) which is arranged radially on the outside of the stator core (20) and is designed to hold a sensor device (50),
wherein the holder (33) has a radial portion (33A) and an axial portion (33B), and engages around the stator core (20) with its axial portion (33B) and radial portion (33A),
wherein the radial portion (33B) extends radially outwards along one of the axial end sides of the stator core (20), and wherein the axial portion (33B) extends along an outer side (22A) of the stator core (20),
wherein the sensor device (52) has a sensor (52) which is designed to detect measured variables of the coils (10), and
wherein the sensor (52) is held by the holder (33) and is arranged axially above the coils (10).

14. Method according to claim 13, wherein the coil carrier (30) is produced such that it engages around the stator core (20) and/or is cohesively and/or adhesively connected to the stator core (20) and/or forms a form fit with the stator core (20) in the axial direction, in the radial direction and in the circumferential direction.

15. Method according to claim 13 or 14, wherein the sensor device (50) or a sensor plate (51) of the sensor device (50) is heat-staked with the holder (33).

## Revendications

1. Moteur électrique (1), en particulier pour un robot ménager (100), comprenant un rotor (3) et un stator (2), le rotor (3) pouvant tourner autour d'un axe de rotation (A) par rapport au stator (2),
le stator (2) présentant un noyau de stator (20), plusieurs bobines (10) et un support de bobines (30) pour les bobines (10), et
le support de bobines (30) étant fabriqué d'une seule pièce par moulage par injection sur le noyau de stator (20),
**caractérisé en ce que**
le support de bobines (30) présente au moins un support (33) disposé radialement à l'extérieur sur le noyau de stator (20), qui maintient un dispositif de capteur (50),
le support (33) présentant une portion radiale (33A) et une portion axiale (33B), et entourant le noyau de stator (20) avec sa portion axiale (33B) et sa portion radiale (33A),
la portion radiale (33B) s'étendant radialement vers l'extérieur le long de l'un des côtés frontaux axiaux du noyau de stator (20), et la portion axiale (33B) s'étendant le long d'un côté extérieur (22A) du noyau de stator (20),
le dispositif de capteur (52) présentant un capteur (52) qui est réalisé pour détecter des grandeurs de mesure des bobines (10), et
le capteur (52) étant maintenu par le support (33) et étant disposé axialement au-dessus des bobines (10).

2. Moteur électrique selon la revendication 1, le dispositif de capteur (50) présentant un capteur de température (52), en particulier un capteur de température NTC, et/ou un capteur à effet Hall (55), en particulier pour la détection de l'angle de rotation.

3. Moteur électrique selon l'une quelconque des revendications précédentes, le dispositif de capteur (50) ou une plaque de capteur (51) du dispositif de capteur (50) étant maté à chaud avec le support (33).

4. Moteur électrique selon l'une quelconque des revendications précédentes, le support (33) formant un support de câble (33C), en particulier en forme de crochet, pour un câble du dispositif de capteur (50).

5. Moteur électrique selon l'une quelconque des revendications précédentes, le support de bobines (30) étant connecté par liaison de matière et/ou par adhérence au noyau de stator (20).

6. Moteur électrique selon l'une quelconque des revendications précédentes, le support de bobines (30) entourant le noyau de stator (20) et/ou formant une liaison par complémentarité de forme avec le noyau de stator (20) dans la direction axiale, dans la direction radiale et dans la direction périphérique.

7. Moteur électrique selon l'une quelconque des revendications précédentes, le support de bobines (30) présentant plusieurs, en particulier exactement deux, supports (32, 33) espacés l'un de l'autre, qui sont disposés à chaque fois radialement à l'extérieur sur le noyau de stator (20).

8. Moteur électrique selon la revendication 7, l'un des supports (32, 33) étant réalisé sous forme de support de raccordement (32) et maintenant un dispositif de raccordement (40), et un autre des supports (32, 33) étant réalisé sous forme de support de capteur (33) et maintenant le dispositif de capteur (50).

9. Moteur électrique selon l'une quelconque des revendications 1 à 6, le support (33) maintenant un dispositif de raccordement (40).

10. Moteur électrique selon la revendication 8 ou 9, le dispositif de raccordement (40) présentant des contacts de raccordement électriques (41) pour les bobines (10) et/ou un point en étoile (43) d'une connexion des bobines (10), en particulier le dispositif de raccordement (40) présentant une borne (44) qui forme le point en étoile (43).

11. Moteur électrique selon l'une quelconque des revendications précédentes,
le stator (2) présentant exactement douze bobines (10) et/ou le noyau de stator (20) présentant exactement douze dents de stator (23) pour les bobines (10), et/ou
le noyau de stator (20) présentant un diamètre intérieur d'au moins 70 mm et/ou d'au plus 85 mm, et/ou
le noyau de stator (20) présentant un diamètre extérieur d'au moins 120 mm et/ou d'au plus 165 mm, et/ou
le noyau de stator (20) présentant une hauteur d'au moins 15 mm et/ou d'au plus 25 mm, et/ou
le noyau de stator (20) présentant une épaisseur de culasse d'au moins 6 mm et/ou d'au plus 12 mm, et/ou
le noyau de stator (20) présentant plusieurs, en particulier exactement douze, dents de stator (23), chaque dent de stator (23) présentant une étendue radiale d'au moins 10 mm et/ou d'au plus 22 mm et/ou une étendue dans la direction périphérique d'au moins 10 mm et/ou d'au plus 20 mm, et/ou
le noyau de stator (20) présentant plusieurs, en particulier exactement douze, dents de stator (23), une fente (26) étant formée à chaque fois entre deux dents de stator (23), laquelle présente une largeur d'au moins 3 mm et/ou d'au plus 6 mm, et/ou
le noyau de stator (20) étant formé par au moins 35 et/ou au plus 45 tôles de stator (27) superposées, et/ou
les bobines (10) présentant à chaque fois au moins 150 spires et/ou au plus 190 spires et/ou un diamètre de fil nu d'au moins 0,2 mm et/ou d'au plus 0,6 mm, et/ou
le support de bobines (30) étant fabriqué en polyamide, en particulier du type PA6.

12. Robot ménager (100) comprenant un moteur électrique (1) selon l'une quelconque des revendications précédentes.

13. Procédé de fabrication d'un moteur électrique (1) selon l'une quelconque des revendications 1 à 11 comprenant un stator (2) et un rotor (3) pouvant tourner autour d'un axe de rotation (A) par rapport au stator (2),
un support de bobines (30) du stator (2) étant fabriqué par moulage par injection sur un noyau de stator (20),
**caractérisé en ce que**
le support de bobines (30) est fabriqué avec au moins un support (33) qui est disposé radialement à l'extérieur sur le noyau de stator (20) et qui est réalisé pour maintenir un dispositif de capteur (50),
le support (33) présentant une portion radiale (33A) et une portion axiale (33B), et entourant le noyau de stator (20) avec sa portion axiale (33B) et sa portion radiale (33A),
la portion radiale (33B) s'étendant radialement vers l'extérieur le long de l'un des côtés frontaux axiaux du noyau de stator (20), et la portion axiale (33B) s'étendant le long d'un côté extérieur (22A) du noyau de stator (20),
le dispositif de capteur (52) présentant un capteur (52) qui est réalisé pour détecter des grandeurs de mesure des bobines (10), et
le capteur (52) étant maintenu par le support (33) et étant disposé axialement au-dessus des bobines (10).

14. Procédé selon la revendication 13, le support de bobines (30) étant fabriqué de telle sorte qu'il entoure le noyau de stator (20) et/ou soit connecté par liaison de matière et/ou par adhérence au noyau de stator (20) et/ou forme une liaison par complémentarité de forme avec le noyau de stator (20) dans la direction axiale, dans la direction radiale et dans la direction périphérique.

15. Procédé selon la revendication 13 ou 14, le dispositif de capteur (50) ou une plaque de capteur (51) du dispositif de capteur (50) étant maté à chaud avec le support (33).
